# EUROPEAN PATENT SPECIFICATION

(11) **EP 3 426 454 B1**
(45) Date of publication and mention of the grant of the patent: **27.04.2022**
(21) Application number: 17720221.5
(22) Date of filing: 10.03.2017
(51) Int. Cl.: B29C 43/02, B29C 70/04, B29C 53/06, B29C 70/54, A45C 5/02, B29C 37/00, B29L 31/00, B29K 23/00, B29K 105/08, A45C 5/03, B29K 267/00, B29K 67/00

(54) **METHOD FOR FORMING A SHELL BODY AND SHELL TYPE BODY OBTAINED WITH SUCH A METHOD**
VERFAHREN ZUR HERSTELLUNG EINES SCHALENKÖRPERS UND MIT DIESEM VERFAHREN HERGESTELLTER SCHALENARTIGER KÖRPER
PROCÉDÉ DE FORMATION D'UN CORPS DE COQUE ET CORPS DE COQUE AINSI OBTENU

(30) Priority: 10.03.2016 IT UA201656561 U; 10.03.2016 IT UA20161549
(43) Date of publication of application: 16.01.2019
(73) Proprietor: GAVAZZI TESSUTI TECNICI S.p.A., 20154 Milano (MI) (IT)
(72) Inventor: SARTOR, Leo, 31044 Montebelluna (TV) (IT); MONTEMURRO, Arcangelo, 23022 Chiavenna (SO) (IT); BONACINA, Luca, 23808 Vercurago (LC) (IT); TORRANI, Nicolò, 20154 Milano (IT)
(74) Representative: Morabito, Sara
(86) International application number: PCT/IB2017/051422
(87) International publication number: WO 2017/153965

(56) References cited:
- EP-A2- 2 261 006
- WO-A1-03/106155
- WO-A1-2014/147130
- DE-U1-202007 000 612
- GB-A- 1 398 727
- GB-A- 2 269 528
- JP-A- H01 271 219
- US-A- 3 907 193
- US-A- 4 179 252
- US-A1- 2004 076 800
- US-A1- 2006 065 662
- US-A1- 2015 313 338

## Description

### Technical field

The present invention concerns a method for forming a shell type body having the characteristics outlined in the preamble of the main claim. It is also aimed at a shell type body obtained with such a forming method.

The invention also concerns a shell type body of self-reinforced composite thermoplastic polymer material having the characteristics outlined in the preamble of claim 13.

### Technological background

The present invention has application in the field of the machining of self-reinforced composite thermoplastic polymer materials.

In such materials, the polymeric matrix and the reinforcing fibers are made from the same base polymer, even if with different properties. For example, composite materials are known in which both the polymeric matrix and the reinforcing fibers are made of polyolefin materials, in particular polypropylene.

In these materials, particularly appreciated also because they are totally recyclable, the reinforcing fibers are oriented and are formed from a first type of polypropylene, having a high elastic modulus, high melting point and high mechanical characteristics. Such reinforcing fibers are at least partially coated by a coating layer formed from a second type of polypropylene having a low melting point and lower mechanical characteristics.

Examples of composite materials of this type, identified hereinafter with the common term "self-reinforced polypropylene", known as SRPP in the field, are already found on the market.

These materials are generally supplied by manufacturing firms in the form of fabrics formed from woven bands, wound in reels, in which the reinforcing fibers described above are present or, alternatively, in the form of rigid flat plates, obtained from such fabrics, which are firstly superimposed in a predetermined number and then subjected to temperature and pressure conditions such as to melt the polypropylene used as coating layer (with lower melting point), locking together the superimposed layers.

The flat plates can also be obtained from superimposed fabrics formed from bands or woven fibers of stretched polyolefin material, suitably spaced with layers of thermoplastic material with lower melting point that acts as binder between the layers of fabric and then subjected to temperature and pressure conditions such as to melt the low-melting thermoplastic material and bind together the layers of fabric.

The presence of the thermoplastic matrix makes this type of composite materials thermoformable, so as to allow curved shaped components to be made from flat plate-like elements.

The known thermoforming process currently most widely used has the provision that the plate-like element is firstly heated to a softening temperature of the thermoplastic matrix and then subjected to drawing through a mold of the male-female type suitably shaped as a function of the shape to be conferred on the plate-like element.

The mold for the drawing step comprises a male element and a female element, respectively shaped and counter-shaped so as to match one another, which can be moved against one another at a predetermined pressure.

The flat plate-like element, arranged between the male element and the female element is then subjected to a plastic deformation caused by the movement of the male element against the female element.

However, such a method has important limits that will be described hereinafter and that become more evident as the required degree of plastic deformation increases, i.e. as the depth, also indicated as ratio between height and flat surface, of the molded object increases.

Such a method is not indeed suitable for obtaining objects with high mechanical properties, even less so objects with high thicknesses of the molded material.

During thermoforming, moreover, a relative sliding is of course caused between the layers of the plate-like material, which causes, in the molded object, the formation of zones of different thickness and, therefore, different mechanical strength. Such sliding, moreover, promotes the subsequent delamination of the layers of material.

Therefore, the mechanical seal of the thermoformed object as well as its structural homogeneity is therefore substantially compromised.

Moreover, due to the sliding of the layers it is not possible to ensure the uniformity of the thickness of the molded object, thus it is not possible to control the weakest zones, i.e. those of lowest thickness, with respect to those of greater thickness and, therefore, greater strength, in which there is superimposition of a few layers of material.

During thermoforming, the material is subjected to forces of substantial intensity, which increase as the depth of the molded object increases and which are not completely absorbed following thermoforming.

Therefore, residual tensions remain in the molded object that are localized in the zones of greater deformation, for example at the edges, and which can trigger cracking or breaking of the material.

Following the sliding of the layers and the local superimposition of the layers zones with greater thickness are indeed generated because the layers are locally overlapped and superimposed, and zones with lower thickness. The latter are weaker whereas the zones of greater thickness have more strength.

The thermoforming processes are characterized, moreover, by considerable costs linked to the need for adjustment of the process, to the long times required for the thermoforming and also to the considerable amount of off-cut produced in each production cycle.

Moreover, by subjecting a composite material to thermoforming creases and wrinkles are formed in the plate-like element, said creases and wrinkles remaining visible in the molded object, harming the aesthetic properties thereof.

Therefore, various provisions have been made to attempt to obtain, with thermoforming, objects of large size that are stronger and to limit the formation of wrinkles, or weakened points.

For example, EP1763430 indicates the need to hold, during forming, the plate-like element at its peripheral region through special clamps that are fixed or movable towards the elements of the mold during deformation. However, such a provision further complicates the thermoforming process both in terms of adjustment of the process parameters, and in terms of embodiment and management of the mechanical components of the mold, in particular of the clamps and of their control devices.

Indeed, it is necessary to have precise and delicate adjustment to avoid the formation of undesired wrinkles and/or damage to the plate-like material.

Moreover, with the process of EP1763430 a great deal of off-cut is produced in each machining cycle. For each plate treated, indeed, the gripping zone where the clamps are applied is discarded, since it is not subjected to thermoforming, and also a portion of material adjacent to it that in the forming process remains outside of the mold or in the edge zone thereof, and in which the adjustment of the process may not be considered satisfactory, is discarded.

Moreover, the objects thermoformed with the method described above are often characterized by an unsatisfactory surface finish.

Moreover, such a method is not suitable for obtaining decorated molded objects, or at least ones bearing a sharp decoration, since due to the deformation of the material during thermoforming molds are obtained that are not very precise or deformed.

All of the aforementioned drawbacks become increasingly evident with the increase in thickness of the plate of layered material and in the plastic deformation to which the material is subjected, i.e. the depth of the object to be molded.

Moreover, as stated, due to the high precision required, the known methods are complicated and, consequently, the objects produced are expensive. Such methods are not, therefore, suitable for making objects of high consumption and/or low unit cost.

Moreover, the objects obtained, especially if of large dimensions and/or with high depth, still have variable thicknesses, wrinkles, especially on the edges, and can be subject to delamination.

US2015/313338 describes a shell type body according to the art.

Therefore, there remains the need to provide a method for forming a three-dimensional object, indicated hereinafter as shell type body, which overcomes the aforementioned drawbacks with reference to the cited prior art.

It should be specified that, in the present description and in the subsequent claims, the term "plate-like element" is meant to indicate an element having a mainly two-dimensional development, with relatively low thickness, smaller than at least one tenth of the two main dimensions, irrespective of the characteristics of rigidity of the element itself. In other words, a plate-like element can be rigid or easily deformable. In the same way, a plate-like element can be an individually manipulable unit, i.e. a rigid plate of thermoplastic composite material, or it can be formed from a plurality of components separated and independent from one another, like for example a pile of layers of superimposed fabric.

### Description of the invention

The problem forming the basis of the present invention is to provide a method for forming a shell type body of self-reinforced composite thermoplastic polymer material from a plate-like element as well as a shell type body obtained with such a method and a press arranged to operate in accordance with such a method, structurally and functionally configured to overcome the limits outlined above with reference to the quoted prior art. Another problem forming the basis of the present invention is, therefore, to provide a shell type body of composite thermoplastic polymer material structurally devised to overcome the limits outlined above with reference to the quoted prior art.

These problems are solved by the present invention through a method for forming a shell type body of self-reinforced composite thermoplastic polymer material from a plate-like element, a shell type body obtained with such a method and a press operating according to such a method, made in accordance with the following claims.

Another object of the invention is to provide a shell type body of self-reinforced composite thermoplastic polymer material having any desired value of the degree of plastic deformation and desired dimensions, which is made from a plate-like element machined with the method of the invention and having high mechanical and aesthetic properties.

Another object is to provide a shell type body with predictable and constant mechanical properties, constant thickness and high surface finish. Another object is to provide a shell type body of desired shape and size that at the same time is strong and light.

Another object of the invention is to provide a case for delicate instruments, for example musical or photographic instruments, which is light and strong formed with the shell type body according to the invention.

Another object of the invention is to provide a case for musical or photographic instruments or delicate instruments that is light and strong. Another object of the invention is to provide a suitcase or other travel container for objects that is at once light and strong.

Another object of the invention is to provide a container for a car or motor vehicle that is strong and of desired shape and size.

Yet another object of the invention is to provide a shell type body that is easily mounted by a user and dismounted if required, for example to reduce bulk, for example during transportation, or to replace parts. According to the invention it is provided a method having the features of the method of claim 1. Further advantageous features of the method of the invention are set forth in the dependent claims 2-12.

According to the invention it is further provided a shell type body having the features of claim 13. Further advantageous features of the shell type body of the invention are set forth in the dependent claims 13-16.

### Brief description of the drawings

The characteristics and advantages of the invention will become clearer from the detailed description of a preferred embodiment thereof, illustrated for indicating and not limiting purposes with reference to the attached drawings, in which:
- Figures 1A and 1B are schematic views of two distinct versions of a press arranged to operate in accordance with the method of the invention,
- Figures 2A and 2B are enlarged details of a portion of the press of Figure 1A or 1B;
- Figures 3 and 4 are, respectively, a schematic plan view from above and a cross section view of a plate-like element arranged to be shaped in the press of Figures 1A or 1B;
- Figure 5 is a cross section view of the plate-like element of Figure 2 mounted on a holding device;
- Figures 6A, 6B, 6C, and 6D, 6E are interrupted section views of a plate-like element machined according to the method of the invention;
- Figures 7A and 7B are cross section views of a variant of the plate-like element of Figure 4 respectively before and after the method of the invention;
- Figures 8 - 11 are schematic plan views from above of respective versions of a plate-like element in successive machining steps;
- Figure 12 is a schematic view of a shell type body able to be obtained with the plate-like element of Figure 8 in an intermediate formation step;
- Figures 13 and 14 are schematic views, respectively, of a first and a second tray made with a plate-like element machined with the method of the invention;
- Figures 15 and 16 are schematic views, respectively, of a first and a second suitcase made with at least one shell type body according to the invention;
- Figures 17 and 18 are schematic views, respectively, of a first and a second small chest made according to the invention,
- Figure 19 is an enlarged view of a detail of a plate-like element according to the invention.

### Preferred embodiment of the invention

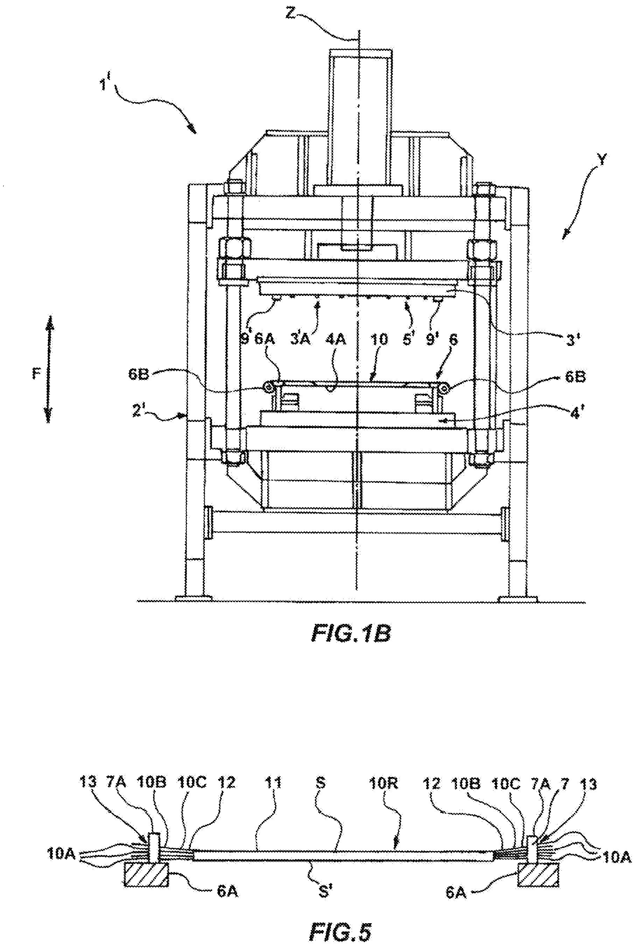

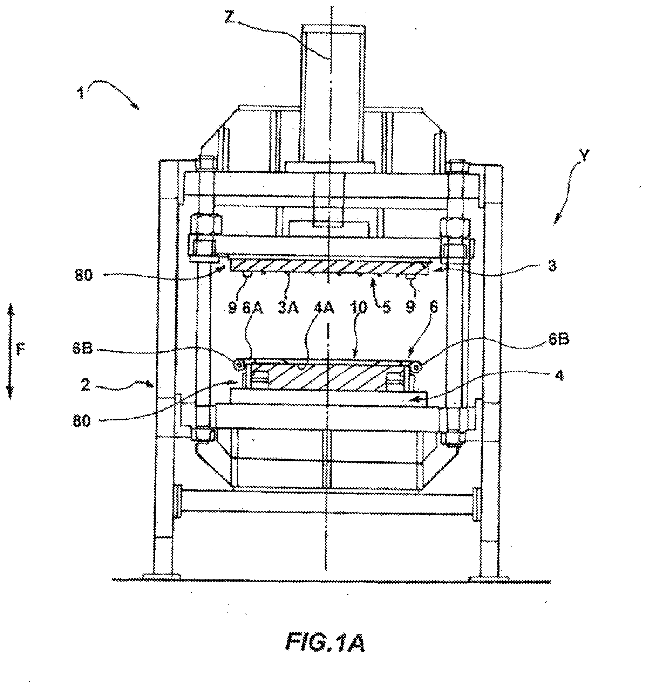

With reference to the attached Figures 1-11, the main steps of a forming method for forming shell type bodies are described hereinafter made of composite thermoplastic polymer material, the shell type bodies being generally indicated with 100.

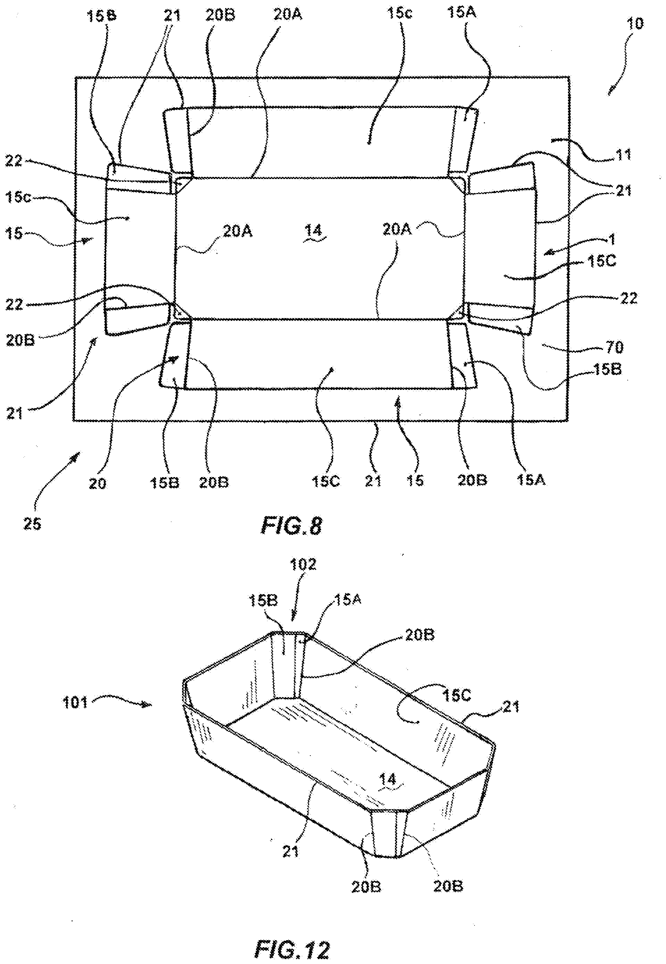

With reference to Figures 12-18 some preferred forms of shell type bodies obtained with the method of the invention are also described.

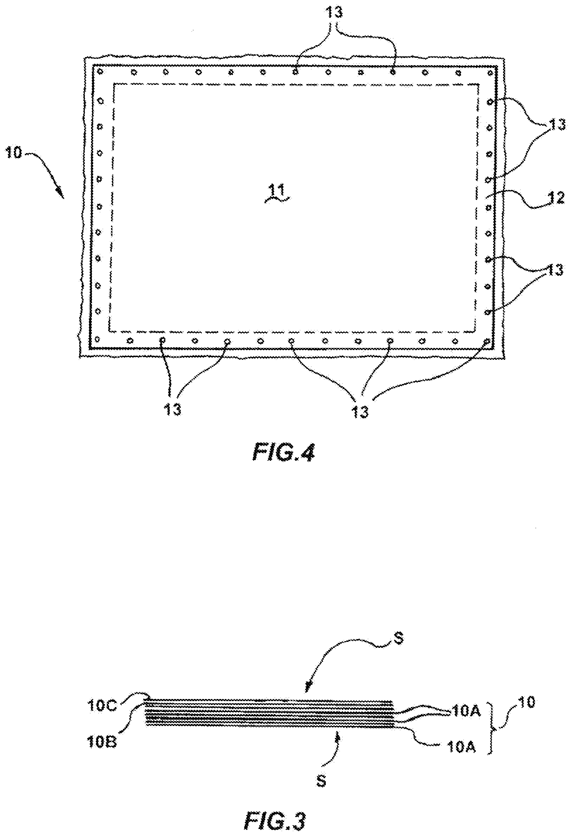

With reference to Figures 1A and 1B, two distinct variants of a press are shown, respectively indicated with 1 and 1', for treating a plate-like element 10, shown in greater detail in Figures 3 and 4 made of self-reinforced composite thermoplastic polymer material, according to the method of the present invention.

With the method of the invention a plate-like element 10 is machined to obtain a plate 10R machined and shaped so as to be able to be subsequently folded to form a shell type body 100. Some examples of shell type body according to the invention are shown purely as an example in Figures 12-18 and described hereinafter.

The press 1 or 1' can be inserted in a forming plant of plate-like elements 10 to obtain shell type bodies in which one or more steps of the forming method of shell type bodies from plate-like elements are carried out so that the press 1, 1' constitutes one of the treatment stations foreseen in such a plant.

With particular reference to Figure 1A, the press 1 comprises a bearing frame 2 on which a first 3 and a second die portion 4 having flat configuration and provided with a respective operating face 3A, 4A intended to interact with the opposite faces S, S' of the plate-like element 10 are fixed.

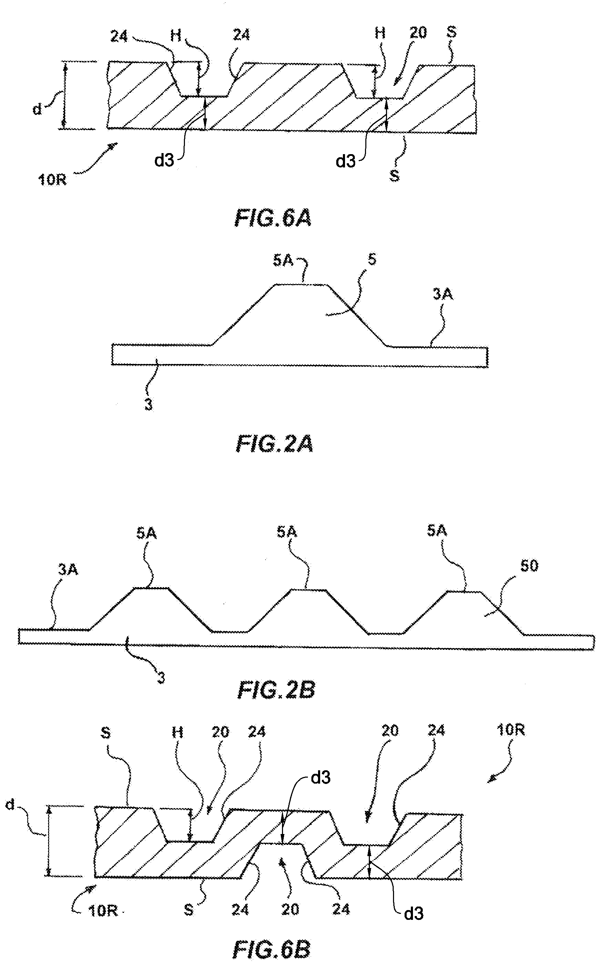

In the version shown, the operating face 3A of the first die portion 3 is provided with a plurality of ribs 5 projecting from the surface of the operating face 3A and projecting with respect to the latter towards the second die portion 4 and intended to form corresponding recesses 20 on a face S, S' of the plate-like element 10, as can be seen in Figures 6A, 6B, and better described hereinafter.

Advantageously, the ribs 5 are provided on the press or on suitable apparatuses fixed to the press so as to be able to be adjustable.

In the version shown, each rib 5, as can be seen more clearly in Figures 2A and 2B, has a trapezoidal profile tapered going away from the operating face 3A with an active surface 5A having a width preferably comprised between 0.5 and 1.2 mm, preferably about 0.9 mm and arranged at a distance of about 0.5 cm from the operating face 3A.

The profile and the size of the ribs are selected based on the type of plate-like material, the thickness and dimensions of the recesses to be formed and the shape of the shell type body to be made.

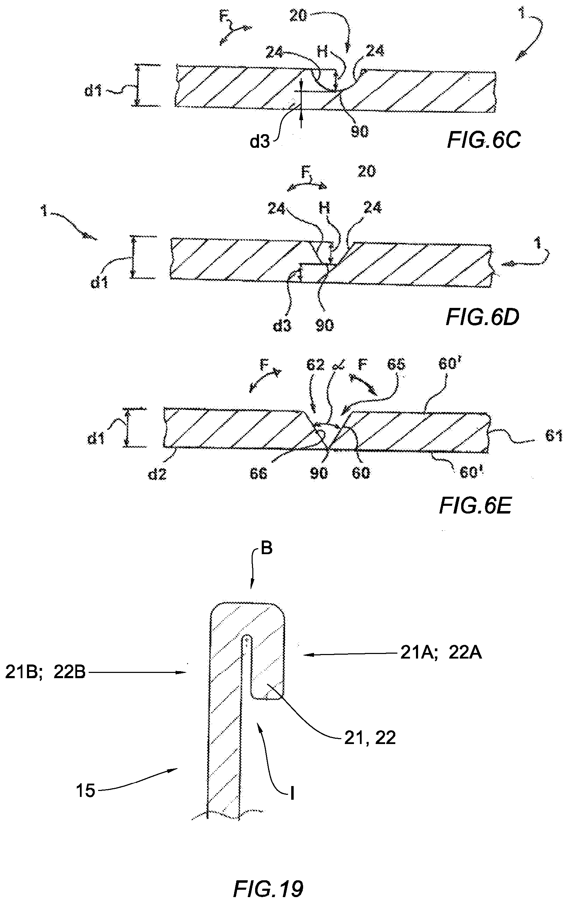

In particular, as will be explained better hereinafter, it is possible to provide ribs with triangular profile, so as to generate V-shaped recesses, or semi-spherical or curved profile to generate recesses of corresponding shape as shown in Figures 6C and 6E.

In some versions, it is possible to use ribs having a height, meant as the distance of the active surface 5A from the operating face 3A of the relative half-mold, comprised between about 0.5 and about 2 cm.

Moreover, in other versions that are not shown, on a die portion it is possible to provide ribs having different profiles from each other, and intended to form, for example, recesses of mutually different depth and width in the plate-like material 10.

In a further version, the second die portion is provided on its operating face with grooves arranged in a position facing the ribs and configured so as to shape couple with the ribs.

In such a version, the ribs can have a height, meant as distance of the active surface from the operating face of the half-mold comprised between 0.5 and 2 cm, the grooves having a corresponding shape so as to shape couple with the ribs.

In other versions that are not shown, the ribs are provided on the operating face of the second die portion. For the purposes of the embodiment of the invention it is necessary for at least one operating face of the two mold portions to be provided with ribs extending from the surface of the operating face of the corresponding die portion so as to form corresponding recesses in the plate-like element 10.

In a version, moreover, the operative faces both of the first and of the second die portion are provided with ribs to define corresponding recesses on both faces S, S' of the plate-like element 10, as shown in Figure 6B and described in detail hereinafter.

In other versions that are not shown, it is possible to provide heating elements, for example electrical resistances, positioned at the ribs and/or the grooves so as to locally heat in an adjustable manner the plate-like element to bring it to a higher temperature at the ribs and/or the grooves and promote the formation of the recesses. Such a provision makes it possible to also increase the definition of the recesses formed on the plate-like material.

The first and the second die portion 3, 4 are mutually displaceable along a direction of movement Z between a forming configuration that is not shown, in whcih they are pressed against one another and press the plate-like element 10 arranged between them, and a release configuration Y, visible in Figure 1A, in which they are spaced apart and the plate-like element 10 can be inserted into or extracted from the press 1.

In the version shown, the second die portion 4 is fixed with respect to the bearing frame 2 with respect to the direction of movement Z, whereas the first die portion 3 is coupled with the frame 2 with possibility of sliding along the direction of movement Z in both ways of the arrow F from and towards the second die portion 4.

It should be noted that to carry out the invention it is sufficient for at least one from the first and the second die portion to be displaceable with respect to the other along the direction of movement Z.

The press 1 further comprises a movement device of the type known in the field and not described in detail, arranged to move the first die portion 3 from and towards the second die portion 4 between the aforementioned forming and release configuration Y and to clamp it against the second die portion 4 with a predetermined pressure.

The press 1 further comprises a system for controlling the forming pressure to adjust the pressure with which the first and the second die portion 3, 4 are pressed in the forming configuration.

The press 1 further comprises a heating device 80 operatively connected to a system for controlling the temperature, not shown, to heat and maintain the operative surfaces 3A, 4A respectively, of the first and of the second die portion 3, 4 at a predefined temperature suitable for the machining of the plate-like element 10.

In a preferred version, the heating device 80 comprises a plurality of resistances provided in the first and in the second die portion to heat the respective operative surfaces 3A, 4A.

In a version that is not shown, the heating device 80 can be operatively associated with just one from the first and the second die portion 3, 4.

In a preferred example, the plate-like element 10 to be treated in the press 1 comprises, as can be seen more clearly in Figures 3 and 4, a plurality of layers of fabric 10A possibly cut from respective rolls and superimposed on one another so as to form a pile with a predefined number of mutually separate superimposed layers of fabric.

The layers 10A are made of self-reinforced composite thermoplastic polymer material, in a particularly preferred version of self-reinforced polypropylene, known as SRPP, a material that, as stated earlier, comprises a plurality of reinforcing fibers, made of stretched polypropylene, coated by a matrix again based on polypropylene but having a lower melting point with respect to the reinforcing fibers.

In particular, the polypropylene forming the reinforcing fibers has higher characteristics of mechanical strength and melting point with respect to the polypropylene forming the matrix.

In other preferred versions it is possible to use plate-like elements made of self-reinforced composite thermoplastic polymer materials based on self-reinforced polyethylene (SRPE), or self-reinforced PET (SRPET).

However, the method of the present invention is also applicable to plate-like elements made of different composite thermoplastic polymer materials, preferably self-reinforced, for example based on ethylene vinyl acetate (EVA), or based on polyamide or polyester.

Moreover, it is considered that the reinforcing fibers can also be formed from non-polyolefin polymers or from inorganic material, for example glass or carbon.

The number of superimposed layers 10A of self-reinforced polypropylene used to form the plate-like element 10 is at least 3, the actual number being selected as a function of the required mechanical characteristics of the shell type body 100 to be formed and the degree of deformation required. Preferably, the number of superimposed layers of composite material is comprised between 6 and 20, in a more preferred manner between 7 and 10.

The dimensions of the plate-like element 10 to be formed can vary widely, since, as discussed earlier, there are no dimensional constraints for the plate-like element to be formed with the method of the invention.

For example, plate-like elements with length and width comprised between 100 and 2000 mm and thickness comprised between 0.3 and 10 mm can be treated.

In a preferred variant embodiment, between the layers 10A it is possible to arrange one or more reinforcement elements made of different material from the layers 10A. For example, the reinforcement elements can be formed from strips of netting of basalt or glass or carbon fiber, or polyaramids, or metal nets.

In other versions it can be foreseen to arrange one or more layers of amorphous material, possibly in foamed form, possibly even amorphous polypropylene or another suitable material between the layers 10A of self-reinforced polymer material.

In this case, the layer of amorphous material is arranged between at least two layers 10A of self-reinforced polymer material, preferably in a central position between the layers 10A.

In one version, the plate-like element 10 is provided both with the layer of amorphous material and with at least one reinforcement element, the layer of amorphous material being internal with respect to the reinforcement elements, preferably constituting the central layer of the plate-like element.

The presence of the layer of amorphous material makes it possible to improve the quality, the depth and the precision of the recesses defined on the plate-like element.

The presence of the layer of amorphous material also makes it possible to make the plate-like element obtained lighter without jeopardizing the mechanical properties thereof.

Such reinforcement elements can be positioned on the entire face of the plate-like element, or at the zones thereof that correspond, in the shell type body in formation, to zones most exposed to the risk of collisions and deformations, in particular in the corner or edge zones of the shell type body to be formed.

The strips of netting are preferably of wide mesh, so as to allow the direct contact between the layers 10A between which the reinforcing strips are arranged and therefore their firm mutual coupling through partial fusion of the thermoplastic polymer material that forms them.

In a variant embodiment of the plate-like element 10 there is provision to insert an RFID tag that cannot be seen in the Figures, to track the final object obtained with the plate-like element 10.

In a preferred version, the RFID tag is passive, i.e. it contains a microchip that contains data in a memory and has an unequivocal identifier, an antenna and a material that acts as a physical support called "substrate". The tag can be activated with radio frequency.

The substrate can be Mylar, plastic film (PET, PVC, PE, etc.), paper or other materials.

The RFID tag is capable of receiving and transmitting via radio frequency the information contained in the chip to an RFID transceiver.

The operating frequency of the RFID tag can be selected based on local standards and/or on the type of final object obtained with the plate-like element 10.

The position of the RFID tag between the layers of the plate-like element 10 is selected based on the characteristics of the object to be formed so as to be reachable by the radio frequency signal.

In a preferred variant embodiment, on at least one face S, S' of the pile of layers of composite thermoplastic polymer material 10A, in an external position with respect to it, there is a finishing layer 10B of thermoplastic polymer material, preferably bioriented PE or PET, adapted for conferring a desired anti-scratch surface finishing to the plate-like element 10.

In an embodiment, a finishing layer 10B is provided on both faces S, S' of the plate-like element 10.

In another version, a sheet of paper 10C for sublimation printing ("sublimation" paper), on which an ornamental graphic is formed as desired, is applied above the finishing layer 10B at the side opposite the pile of layers of composite material 10A, so that the sheet of paper 10C for sublimation printing constitutes the visible surface of the shell type body 100 to be formed.

In this way, as explained more clearly hereinafter, during the heating and pressure step of the plate-like element 10, or cooling step thereof, the printing of the ornamental graphic present on the sheet for a sublimation printing on the finishing layer 10B is obtained.

In this way, the heat of the plate-like element 10 itself is exploited, the latter indeed having been brought to a temperature of 150-175°C.

In a version, a sheet of sublimation paper 10C can be applied on both finishing layers 10B provided on the two opposite faces S, S' of the pile of layers of composite material 10A. Such a version is particularly used to make shell-type bodies intended to have both faces in view during use, or when it is wished to print decorations on both faces.

The plate-like element 10 has a generically rectangular configuration, is delimited by two opposite faces S, S', on which a central region 11 and a peripheral region 12, extending to surround the central region 11, are defined, as can be seen more clearly in Figure 4.

In order to be processed, the plate-like element 10 is preferably fixed onto a retaining device 6 configured to hold the plate-like element 10 at its peripheral region 12 so that the first 3 and the second die portion 4 can abut and deform the plate-like element 10 at its central region 11.

The retaining device 6 can be reversibly constrained to the press 1, in the example shown, to the second die portion 4.

In other versions that are not shown, the retaining device can be formed in the die portion intended to receive the plate-like element 10.

A preferred retaining device suitable for being used in the invention is shown schematically in Figures 4 and 5 and is made as described in WO2014/147130, to the same Applicant. However, in the present invention other retaining devices suitable for holding a peripheral region 12 of the plate-like element 10 can be advantageously used to avoid the shrinkage or deformation of the material due to the temperature variations and to the mechanical machining.

It is possible to use, for example, clamps or other devices known for the purpose in the field as retaining devices.

In the version shown, the retaining device 6 comprises a frame 6A provided with gripping elements 6B arranged to facilitate automatic movement, or movement by an operator, and with a plurality of pins 7 all projecting from the same side intended to be inserted on corresponding holes 13 made in the peripheral region 12 of the pile of layers 10A of the plate-like element 10.

The plate-like element 10 is mounted on the frame 6A, inserting the pins 7 in the holes 13, so as to engage the plate-like element 10 with the pins 7 with possibility of disengagement through the free ends 7A.

In another version that is not shown, the gripping elements comprise gripping elements of the punch/matrix type arranged to clamp the plate-like material and configured so as to make a shape coupling. Advantageously, each gripping element comprises a punch and a matrix positioned in mutually facing position, so that the peripheral region of the plate-like element is arranged between each male punch/matrix pair, and able to be mutually moved to clamp/release the layers of the plate-like element.

The provision of such gripping elements makes it possible to further facilitate and speed up the mounting/dismounting operations of the plate-like element from/on the frame 6A.

In any case, the retaining device is sized and positioned so as to stretch the plate-like element 10 to avoid the shrinking of the material in the passage between the heating step and the cooling step and, therefore, the forming of creases or wrinkles.

The frame 6A is positioned, with the press 1 in release configuration Y, at the second die portion 4, so that the central region 11 of the plate-like element 10 abuts on the operating face 4A of the second die portion 4 and faces the operating face 3A of the first die portion 3.

The first and second die portions 3, 4 are heated and kept at a controlled temperature through a suitable system for controlling the temperature, not represented.

Preferably, the operating face 3A, 4A of each die portion is heated and kept at a forming temperature the value of which is selected based on the material of the plate-like element 10 and such as to cause the at least partial fusion of a matrix of the self-reinforced composite thermoplastic polymer material without causing the substantial fusion of the fibers.

In the case of polypropylene based self-reinforced composite material SRPP the heating temperature is comprised between 130° and 175°C. When the plate-like element 10 is at a temperature comprised between 170°C and 178°C, preferably about 175°C, the first die portion 3 is moved into forming configuration, i.e. the operating face 3A is brought into contact with the plate-like element 10 and pressed against the second die portion 4 with a pressure preferably comprised between 15 and 40 bar. Such a forming configuration is maintained for a time period selected based on the thickness of the plate-like element and preferably usually comprised between 2 and 15 minutes, in one version, for a time comprised between 0,5 and 5 minutes.

In the aforementioned operating conditions of the press - temperature, pressure and forming time - there is an at least partial fusion of the matrix of composite material, so as to consolidate the plate-like element 10 locking together the superimposed layers 10A of the plate-like element 10. Preferably, such consolidation takes place only at the central region 11, whereas the peripheral region 12 remains unconsolidated, with the layers 10A of the pile that remain separate and independent.

In the forming configuration, moreover, the ribs 5 of the first die portion 3 exert a pressure on the surface S of the plate-like element 10 such as to define a plurality of recesses 20 at the central region 11.

The ribs 5 form the recesses by locally pressing the layers of the plate-like element 10 without cutting or incising them.

In this way, the structure of the plate-like element 10 is kept integral and this has a positive influence on the mechanical properties of the shell type body.

With the method of the invention the plate-like element 10 is kept constrained to the retaining device 6 during the forming step, without the need to separate it from the retaining device.

This makes it possible to substantially simplify the process of the invention with respect to known processes at the same time obtained a high-quality thermoformed product.

The presence of the retaining device 6 makes it possible to avoid deformations of the plate-like element 10 due to shrinkage phenomena generated by the heating or even by the pressure exerted by the press 1 and to avoid undesired movements of the plate-like element 10 during forming.

If the plate-like element 10 is provided with the sheet or sheets of sublimation paper 10C, during the forming step the printing of the ornamental graphic present on the paper for sublimation printing 10C on the corresponding finishing layer 10B is obtained.

The pressure and temperature conditions of sublimation printing are compatible with the pressure and temperature values of the forming step, moreover, the times required by such a forming step make it possible to obtain excellent quality results in the surface finishing of the plate-like element 10.

The printing is carried out on a flat object and this simplifies the printing process with respect to the prior art.

Moreover, during forming, there is no appreciable deformation of the plate-like element 10, and therefore very precise printing with well-defined outlines of the ornamental graphic is obtained.

In such a version of the forming method of the invention, the consolidation of the plate-like element and the forming of the recesses are carried out in the forming step.

After having formed the plate-like element 10 as explained above, the first die portion 3 is lifted, i.e. taken away from the second die portion 4 and moved into release configuration Y, so as to be able to allow the extraction of the plate-like element 10.

Thereafter, the plate-like element 10 is subjected to a cooling step, carried out in the press 1 itself or in a dedicated conditioning station, wherein the plate-like element 10, kept on the frame 6A, or on an analogous retaining device, in order to avoid deformations and shrinkages of material, is left to cool or made to cool.

In the case in which the cooling step is carried out on the press 1, it is possible to reversibly constrain, before forming, the plate-like element 10 to the second die portion 4 to avoid deformations thereof due to shrinkage phenomena during heating. In this case, the retaining device 6 could not be provided or incorporated in the second die portion 4.

In this case, the plate-like element 10 is kept constrained to the second die portion 4 during the forming step until a cooling temperature is reached such as to avoid shrinkage phenomena of the material.

In the case in which the cooling is carried out in a distinct conditioning station, the plate-like element 10 is moved towards such a station together with the retaining device 6.

In any case, the plate-like element 10 is kept on the retaining device 6, or constrained to the second die portion 4, so as to be kept under tension until the material reaches a temperature below the shrinkage temperature in order, as stated, to avoid deformations of the plate-like element due to shrinkage phenomena, usually comprised between 50°-80°C. In the case of SRPP such a temperature is about 50-60°C.

In a version, it is possible, during the cooling step, if it is not already present, to apply on one or both of the faces S, S' of the plate-like element a finishing layer 10B of thermoplastic polymer material, preferably bioriented PET, adapted for conferring a desired surface finishing to the plate-like element 10 and a sheet of sublimation paper 10C on which an ornamental graphic is formed as desired on each finishing layer 10B.

In a version it is provided for applying, during the cooling step, on one or both faces S, S' of the plate-like element 10, a sheet of sublimation paper 10C on which an ornamental graphic is formed as desired.

Such layers are applied on the plate-like element 10 when the latter is at a temperature such as to ensure the adhesion of the finishing layer 10B on the layers 10A and the printing of the decoration present on the sheet of paper 10C for sublimation printing on the plate-like element 10, preferably at a temperature comprised between 150°C and 170°C.

Thereafter, the plate-like element 10 is pressed by means of a suitable press to allow the adhesion of the finishing layer 10B and the printing of the decoration of the sheet of sublimation paper 10C, or only the printing of the decoration of the sheet of sublimation paper 10C.

In a preferred version of the method of the invention, it is provided for consolidating the plate-like element in a dedicated consolidating station foreseen upstream of the forming press in which the formation of the recesses 20 takes place.

For this purpose, the plate-like element, mounted on a suitable retaining device, is firstly fed to a consolidating press. The latter comprises a lower half-mold and an upper half-mold that are moved and pressed against one another, with the plate-like element 10 arranged between them, at a pressure preferably comprised between 5 and 40 bar, for a time preferably comprised between 2 and 15 minutes, in a version, for a time comprised between 0.5 and 5 minutes, as a function of the characteristics and the thickness of the composite thermoplastic polymer material.

The lower and upper half-mold are, moreover, suitably heated to a temperature such as to cause the at least partial fusion of a matrix of the self-reinforced composite thermoplastic polymer material without causing the substantial fusion of the fibers. In the case of SRPP, at a temperature comprised between 130° and 175°, preferably between 150° and 170°. Thereafter, the plate-like element 10 consolidated and mounted on the retaining device 6 is fed to a forming press and subjected to forming to form the recesses 20.

Also in this case, the plate-like element 10 is kept under tension until the material reaches a temperature below the shrinkage temperature in order, as stated, to avoid deformations of the plate-like element due to shrinkage phenomena, or to leave residual tensions in the consolidated material. Figure 1B shows a forming press 1' suitable for being used to form the recesses 20. Parts corresponding to the press 1 will be indicated with the corresponding reference numerals and will not be described in detail.

The first and second die portion 3', 4' are pressed with a pressure comprised between 15 and 40 bar and kept in the forming configuration for a time period such as to form the recesses 20, usually between 1 and 10 minutes, in some versions 2-5 minutes.

In such a version, the consolidation and the forming step are carried out in two different treatment stations and can also be carried out some time apart from one another.

By carrying out the forming of the recesses in the cooling step of the plate-like element 10, i.e. immediately after consolidation, thus on a hot plate-like element 10, it is not necessary, during the forming step, to heat the operative faces 3'A, 4'A of the print portions.

Such a version is particularly preferred because it makes it possible to exploit the cooling time of the plate-like material 10 to carry out the forming step of the recesses 20.

Moreover, by carrying out the forming at lower temperatures with respect to those necessary for consolidation, even greater precision is obtained in the position and shape of the recesses because it avoids the risk of shrinkage of the material during forming with consequent movement of the position of the recesses with respect to what is desired.

In the case in which the consolidation and the forming of the recesses are carried out on different presses, it is possible to foresee a single consolidating press that feeds a plurality of forming presses arranged in parallel, or vice-versa two consolidating presses that feed a single forming press, according to the times selected, respectively, for the consolidating and forming step.

The plate-like element formed can be left to cool on the forming press or extracted from it when it has reached a certain temperature. The plate-like element is kept on the frame in a state of tension during the consolidating, forming and cooling step to avoid shrinkages of material and formation of wrinkles.

Such a provision makes it possible to reduce the overall times of the forming process.

The application of the finishing layer 10B and/or of the layer of card 10C for sublimation printing on at least one face of the plate-like element, and, therefore the sublimation printing can be carried out during the forming step of the recesses or even in the consolidating step.

Advantageously, the plate-like element 10 is kept on the retaining device 6, or constrained to the press, so as to be kept under tension during the forming of the recesses and/or until the material reaches a temperature below the shrinkage temperature in order, as stated, to avoid deformations of the plate-like element due to shrinkage phenomena, usually comprised between 50°-80°C.

In another version of the method, the forming step of the recesses is carried out on a consolidated and cold plate-like element.

In such a version, the forming press is provided with heating devices to heat the first and second die portion to a heating temperature comprised between 130° and 175°, preferably between 150° and 170°, to obtain the forming of the recesses during pressing.

Also in such a version, the application of the finishing layer 10B and/or of the sheet of paper 10C for a sublimation printing on at least one face of the plate-like element, and therefore the sublimation printing can be carried out during the forming step of the recesses or consolidating step. In this case, it is possible to prepare, and possibly store, rigid sheets of consolidated plate-like material that will be subjected to forming to form the recesses only when necessary, possibly selecting the decoration to be made only at the moment of forming.

At the end of the forming step, in all of the cases described above a plate-like element 10 that is consolidated and formed, i.e. equipped with the recesses 20, is obtained, indicated hereinafter as plate 10R, shown in part in Figures 6A - 6E, with the layers welded together.

The plate 10R has a flat shape, delimited by two opposite faces S, S', and thickness "d1" usually comprised preferably between 0.5 and 20 mm; the actual thickness depends on the number of layers of the plate-like element 10.

The plate 10R is provided on at least one or on both faces S, S' with a plurality of recesses 20, such as to define on the plate 10R itself a plurality of mutually orientable panels 25 connected together through a corresponding recess, as explained better hereinafter.

Each recess of the aforementioned plurality of recesses 20 acts as a hinge intended to allow the mutual orientation of the panels of the plate 10R with respect to one another to form the shell type body 100.

Figures 6A-6E show alternative versions of the recesses 20.

In the versions shown, each recess has edges 24 arranged so that the recess 20 has a V-shaped profile, Figure 6E, or U-shaped profile, Figure 6C, or trapezoidal profile, Figures 6A, 6D.

By varying the shape of the ribs and, therefore, of the recesses, it is possible to obtain shell-type bodies of various shapes; for example, by suitably shaping the ribs 5 it is possible to obtain V-shaped recesses with incident walls inclined by an angle α selected based on the shape of the shell type body in formation.

Advantageously, each recess 20 has a depth H comprised between 20-80% of the thickness "d1" of the plate 10R, so that at each recess 20 a portion of the plate 10R having a further thickness "d3" is not engaged by the recess 20, like in the versions of Figures 6A-6E.

The recesses 20 of one same plate 10R can be the same or mutually different shape.

The actual depth H of each recess 20 is selected based on the subsequent use of, and required strength of, the shell type body 100 in formation. Each recess 20 is delimited by two opposite edges 24 and has depth "H", the shape of the edges 24 and the depth "H" of each recess depending on the shape and size of the ribs 5 used.

The actual depth H of each recess 20 is selected based on the subsequent use of, and required strength of, the shell type body 100 in formation.

By varying the position of the ribs 5 and, therefore, of the recesses defined on the plate 10R, the shape and the number of recesses and thus of the panels defined and, consequently, the shape of the shell type body formed by then folding the plate 10R vary.

With the method of the invention, therefore, in a simple way it is possible to obtain shell-type bodies of desired shape and size.

In particular, if it is wished to make a shell type body in which the lateral walls have curved portions or are joined to the bottom wall of the shell central panel by means of a curved fitting, it is possible to provide, in some zones of the active face of the mold, a plurality of parallel ribs 50 arranged a reduced distance from one another, for example as shown in Figure 2B and intended to form a plurality of parallel and close together recesses between the lateral panels and the central panel.

Advantageously, the ribs of the plurality of close together ribs 50 are arranged symmetrically so as to obtain a radial fitting having symmetrical curvature decreasing going away from the central portion thereof.

The distance between the ribs of the plurality of ribs advantageously varies between 2 and 5 mm.

In this way, when the panels are folded around the respective recesses, walls of various inclination are formed, the curvature of which depends on the distance of the ribs and on the profile thereof.

After the forming step, the plate 10R is subjected to a cutting step in which it is cut in suitable zones, by means of suitable cutting tools known in the field.

The cutting step is carried out on the plate 10R at a temperature comprised between 20°C and 60°C, so as to avoid burrs or deformations of the edges of the cutting lines and to make clean and well-defined cuts. The actual value of the temperature of the cutting step is selected based on the self-reinforced composite thermoplastic polymer material of the plate-like element so as to obtain clean cuts with well-defined outlines. Advantageously, the plate 10R is held, during the cutting step, on the same retaining device 6 used for the forming and then tensioned.

The cutting step is advantageously but not necessarily carried out on a dedicated retaining station, by means of suitable cutting tools.

In alternative versions of the plate-like element of the invention, the recesses made on the latter are formed by means of incision 20' of part of the thickness "d" of the consolidated plate 10R.

The incisions 20' are made through cutting tools that cut some of the layers of the consolidated plate 10R.

Similarly to the recesses, each incision of the plurality of incisions 20' defined on the plate 10R acts as a hinge intended to allow the mutual orientation of the panels of the plate 10R with respect to one another to form the shell type body 100.

The incisions 20' can be the same shape already discussed for the recesses 20 and therefore they will not be described in detail. The incisions 20' have depth "H" such as to extend for a percentage comprised between 20% and l'80% of the total thickness "d" of the plate 1, so that at each incision 20' an integral portion 90 of the plate 10R having a further thickness "d3" remains.

The actual depth H of each incision of the plurality of incisions 20' is selected based on the subsequent use of, and required strength of, the shell type body 100 in formation.

The various incisions of the plurality of incisions 20' defined on the plate 1 can have the same or mutually different depth H.

By adjusting the depth of each incision it is possible to determine the number of layers of the plate 10R that are cut and, vice-versa, the number of layers that remain intact, thus also the further thickness "d3" of the integral portion 90 of the plate 10R at each incision.

The possibility of leaving a desired number of layers of the composite thermoplastic polymer material intact, also at the incision, makes it possible to optimize the mechanical strength of the shell type body that is obtained.

The possibility of adjusting the depth of the incision and, therefore, the number of intact layers and vice-versa those that are cut, makes it possible to obtain on each occasion the optimal compromise between the mechanical strength of the shell type body, which increases as the number of intact layers increases, and the ease of folding the plate to form the shell type body.

It is also possible to very precisely determine the mechanical strength of the shell type body, avoiding weakening thereof at the edges.

Moreover, since some layers of the material remain intact it is possible to repeatedly fold the plate around the incisions of the plurality of incisions without fear of yielding of the material itself.

This makes it possible to obtain a shell type body that can be mounted and dismounted repeatedly. Therefore, when not in use, the shell type body according to the finding can be dismounted to reduce bulk.

Moreover, it is possible to dismount the shell type body to replace components thereof.

In the case in which the plate-like material is provided with reinforcement elements, made, as stated, of metal net, fiberglass, basalt or aramid net, or amorphous material, the depth of the incision is selected so as not to damage the layers provided with the reinforcement elements. Alternatively, the reinforcement elements can be positioned in zones of the plate not engaged by the incisions 20.

The arrangement of the edges 24 of each incision 20', i.e. the shape of each incision 20', is selected based on the shape of the shell type body to be formed, as explained better hereinafter.

The incisions are made on a flat plate 10R and the planarity of the plate 10R makes it possible to maximize the precision of the incisions made.

In some versions, the plate 10R can be provided on both faces S, S' with one or more incisions to make it possible to fold the plate to make a shell type body.

Advantageously, in order to make the incisions of the plurality of incisions 20 laser cutting tools are used.

Such laser cutting tools make it possible to very precisely adjust both the outlines and the depth of the incisions.

Moreover, the laser cutting tools make it possible to freely vary the shape and extension of the incisions and to make rectilinear or curvilinear incisions.

This makes it possible to obtain, in the plate 10R, panels of various shapes and, therefore, various kinds of shell-type bodies.

Moreover, by cutting the plate 10R with laser cutting tools, a localized fusion of the material of the plate 10R is caused at the incisions 20' that are made.

The characteristics of the laser cutting tools used are selected so as to carry out the fusion both of the polymeric matrix and of the reinforcing fibers of the plate 10R at the edges 24 of the incision.

The laser cutting tools used are preferably lasers with CO₂ source, such a type having proven particularly suitable for the materials of the plate according to the finding. The laser is actuated at an incision temperature that depends on the nature of the polymer material and on the characteristics of the incision to be made, i.e. shape and depth.

Usually the temperature of the laser is comprised between 800-2000°C, preferably 1000-1500°C.

In a particularly preferred version the incisions are made using a laser out of focus with respect to the plane of the incision.

This makes it possible to obtain incisions with very precise edges 24 free from burrs.

Moreover, the fusion of the material of the plate 10R at the edges 24 of the incisions 20' makes it possible to seal the edges thereof, avoiding separations of the layers of material or delaminations thereof.

In this way, the incisions are prevented from being fragile points of the shell type body in formation; on the other hand, the material maintains its resistance also at the incisions.

Consequently, the edges of the shell type body in formation become fragile points thereof, but keep their strength. This greatly increases the overall mechanical seal of the shell type body.

In a version, the plate is held by means of suitable retaining devices during the action of the cutting tools.

However, particularly when laser cutting tools are used, it is not necessary to hold the plate during the incision.

Moreover, the laser cutting tools are very versatile and can be programmed so as to obtain plates with incisions that are different from each other in depth and/or shape and/or edges.

At the same time, since such tools have high repeatability, it is possible to obtain a large number of plates with the same incisions, i.e. with the same depth and/or shape and/or edges.

Moreover, by carrying out the incisions with laser cutting tools the machining time of the plate is considerably reduced.

Moreover, the laser cutting apparatus is versatile and slim, and forming molds or other complex, bulky and expensive apparatuses are not required.

In another version, to make the incisions in the plate 10R, it is possible to use blade cutting tools that are provided with one or more blades each having a shape corresponding to that of the incision to be made and with heating means positioned at the blades and arranged to heat the blade, or the blades, up to a desired temperature.

The heating temperature of the blades is selected so as to cause the fusion both of the polymeric matrix and of the reinforcing fibers at the outlines of the incision that is carried out.

By varying the shape of the blades it is possible to obtain V-shaped or U-shaped or trapezoidal incisions or of the desired shape, varying the height or the position thereof during the incision, it is possible to vary the depth of the incision(s) made. Advantageously, it is possible to use blades having a height of about 2 cm.

Also in this case, by varying the position of the cutting tools, it is possible to vary the depth of the incision and, therefore, the number of layers cut and, vice-versa, intact of the plate 10R.

By varying the configuration and the position of the incisions 20 and, therefore, the shape and number of panels defined on the plate, it is possible to obtain shell type bodies with various shapes and with a desired number of sides.

Moreover, by varying the profile of the incisions it is possible to vary the mutual inclination of the panels and, therefore, of the walls of the shell type body 100, in an analogous manner to what was already discussed for the recesses.

Some versions of plate 10R obtained according to the method of the invention and some types of shell type body obtained by folding one of the aforementioned plates are described in detail hereinafter.

Some embodiments of a plate according to the invention provided with a plurality of recesses and/or incision to allow the preparation of a desired shell type body are described hereinafter.

Where not expressly specified, the recesses can equally be in incision form and incisions and recesses will be indicated with the same reference numerals.

In the version of Figure 8, the ribs 5 are arranged on the press or on suitable apparatuses fixed to the press or the cutting tools are positioned so as to define, on the plate-like element 10, a central panel 14 of substantially quadrangular shape and four lateral panels 15 extending respectively from each of the sides of the central panel 14 and connected to the latter by means of a corresponding first recess, or incision 20A, so that the lateral panels 15 are orientable with respect to the central panel. In such a version, the plurality of recesses, or incisions 20 comprises, moreover, further recesses, or incisions 20B defined on each lateral panel 15 and arranged in a transversal direction with respect to the corresponding first recess 20A.

The further recesses, or incisions 20B are configured so as to define, on each lateral panel 15, a central body 15C and two opposite peripheral portions 15A, 15B orientable with respect to the central body 15C by means of rotation with respect to the respective further recess, or incision 20B.

Advantageously, the cutting tools make first cutting lines 21 on the plate-like element 10 defining the shape of the plate 10R intended to be subsequently folded to make the shell type body 100, and arranged so as to allow the subsequent separation of the plate 10R from a peripheral portion 70 of the plate-like element 10 that surrounds the plate 10R.

The cutting lines 21 define the external shape of the plate 10R.

The peripheral portion 70 of the plate-like element 10 that surrounds the plate 10R constitutes the off-cut of the forming method according to the invention.

The extension of such a peripheral portion 70 depends on dimensional constraints of the known cutting tools and it can also be very small.

The off-cut of the method of the invention is reduced by at least 10-15% with respect to the off-cut obtained with known thermoforming processes. The plate 10R is also provided with further cutting lines 22 positioned in suitable desired zones of the plate and arranged to facilitate the subsequent folding and mutual orientation of the panels to form the shell type body 100.

The presence, configuration and position of the further cutting lines 22 depends on the shape of the shell type body to be formed.

In a preferred version, the cutting lines 22 and/or the further cutting lines 21 can be made through cutting tools, advantageously through laser cutting tools.

Thanks to the versatility of laser cutting tools, it is possible to freely select the configuration and position of the further cutting lines 22 and/or of the cutting lines 21 and, therefore, to shape the plate 10R as desired so as to obtain shell type bodies having any desired shape.

In a version, during or after the cutting step it can be foreseen to fold an edge portion of the plate 10R cut and separated from the peripheral portion on the relative panel.

Advantageously, it is provided for folding an edge portion 21A delimited by the cutting lines 21, i.e. an external edge portion of the plate 10R, and/or a further edge portion 22A delimited by the further cutting lines on the relative panel of the plate 10R.

In this way, folded edges "B" are formed in the plate 10R at one or more cutting lines 21 or further cutting line edge portions 21A, 22A are superimposed on peripheral portions 21B, 22B of the relative panel 15. This makes it possible to avoid the formation of sharp outer edges that may potentially be dangerous for a user.

Moreover, the edge portion 21A or the further edge portion 22A can be folded so that a gap "I" is defined between them and the panel 15 of the plate 10R.

The gap "I" can be used for example to insert and fix a coating material of the plate 10R, for example a fabric making the anchoring thereof to the plate 10R firmer.

The presence of the edge portion 21A or of the further edge portion 22A also makes it possible to cover possible stitching of the coating fabric.

The folding is carried out with known folding tools used in the field. The folding is carried out on a hot plate, at a temperature comprised between 60-130°C.

Advantageously, the edge portion 21A and/or the further edge portion 22A have an extension of at least 5 mm.

Thereafter, the plate is then cooled so that it consolidate in the folded configuration.

Advantageously, in order to prepare the shell type body, the panels of the plate 1 can be rotated around the various incisions in both directions of the arrow F: so as to open the incisions or the recesses 20, i.e. so as to move apart the opposite edges 24 of each incision or each recess so that the opposite edges 24 of the incisions or of the recesses 20 constitute the outer edges of the shell type body, or, preferably, the panels are rotated so as to close the incisions 20 or the recesses, i.e. so as to bring together the opposite edges 24 of each incision. In this last case, the edges 24 of the incisions are arranged inside the shell type body and the integral portion 90 of the plate 10R at each incision forms the outer edges of the shell type body.

This last version is particularly recommended in the case in which V-shaped incisions are made.

Also in the case in which the plate is provided with recesses, the panels of the plate can be rotated in both directions of the arrow F about the recesses.

The plate 10R is intended to be folded to make a shell type body by rotating the lateral panels 15 with respect to the central panel 14 about the respective first incisions or recesses 20A, so as to position them transversally to the central panel 14.

Thereafter, the peripheral portions 15A, 15B of each lateral panel 15 are folded so as to at least partially superimpose the facing peripheral portions of two adjacent lateral panels 15.

This makes it possible to reinforce the edge zones of the shell type body in formation.

The superimposed peripheral portions 15A, 15B of the lateral panels 102 can be welded or locked together in any other suitable way, for example by interlocking, through rivets, through stitching, gluing or welding.

In a preferred version, the peripheral portions 15A, 15B can be removably fixed together through removable fixing means in order to be able, if required, to be separated to dismount the shell type body.

The shell type body 100 can be provided with reinforcing means provided in edge zones of the shell type body 100 and/or in edge zones thereof. Such reinforcing means can be fixed or fastened in a removable manner to the shell type body 100 so as to be able to be separated from it if necessary.

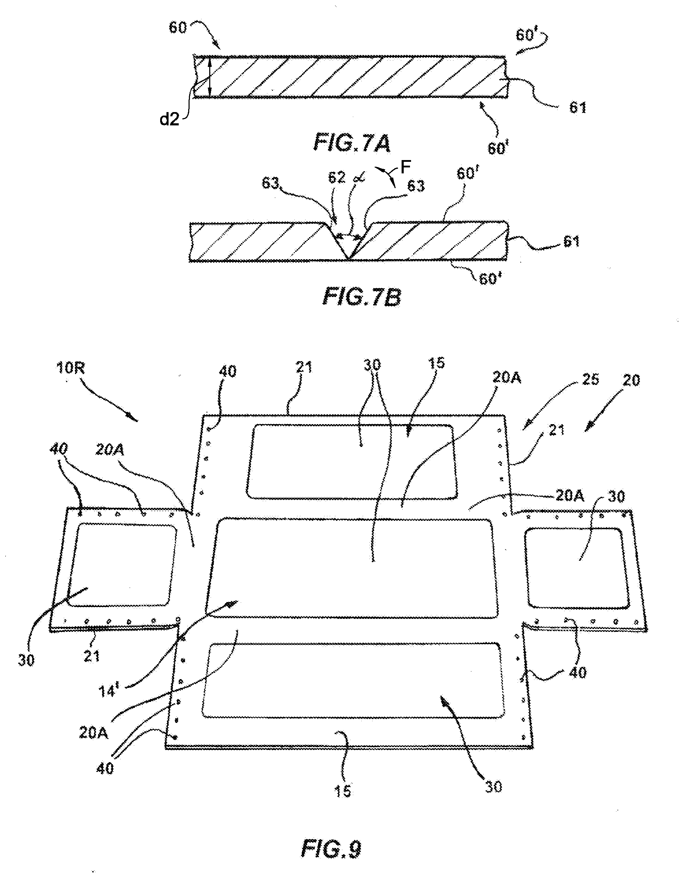

Figure 9 shows a further version of a plate 10R according to the invention adapted for obtaining a shell type body, wherein parts corresponding to the plate of Figure 8 are indicated with corresponding reference numerals and are not described in detail.

Such a plate 10R has already been separated from the corresponding semi-worked product.

In such a version, the plate 10R is provided with through holes 40, intended to receive rivets, or other fixing means, possibly removable, to consolidate the structure of the shell type body 100 to be formed and to facilitate the joining of the lateral panels 15.

In a version, the through holes 31 can be obtained with laser cutting tools. In such a version, the plate 10R is provided, on at least one face S, S' with a plurality of reinforcing panels 30, advantageously made of honeycomb material and intended to locally reinforce the shell type body 100 obtained. Each reinforcing panel 30 is positioned on a central portion of the lateral panels 15 or central panels 14, however the shape, size and position of the reinforcing panels 30 are selected based on the characteristics of the shell type body to be formed.

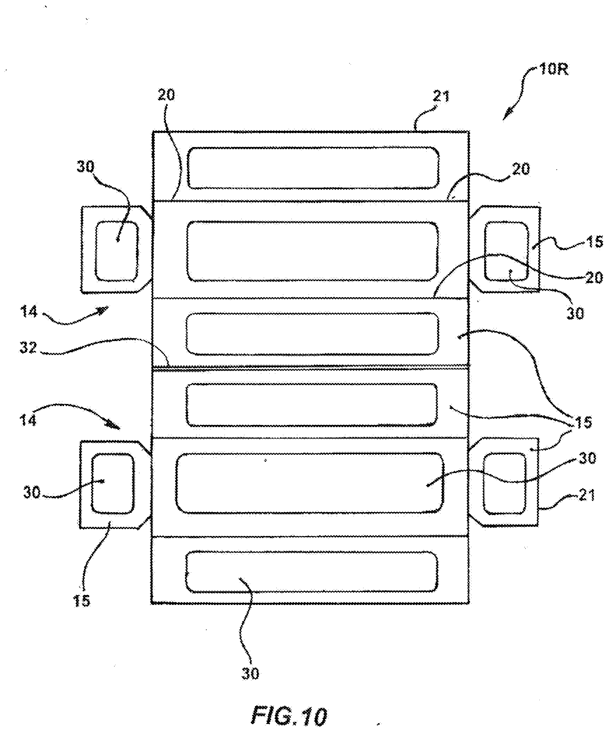

Figure 10 shows a further variant of a plate 10R adapted for obtaining a shell type body according to the finding cut from the corresponding plate-like element, wherein parts corresponding to the plate of Figure 8 are indicated with corresponding reference numerals and will not be described in detail. The plate 10R of Figure 10 is intended to form a box-shaped closed shell type body and comprises a first plurality of panels 14, 15 intended to form a first half-shell and a second plurality of panels 14, 15 intended to form a second half-shell of the shell type body, connected together through a recess, or hinging incision 32 defined between two contiguous lateral panels 15 of the first and of the second half-shell, respectively.

Such a hinging recess 32 is intended to constitute the movement hinge between the two half-shells of the same shell type body, for example to open/close the shell type body.

Also in such a version, the recesses and/or the hinging recesses can be replaced with incisions made with suitable cutting tools, preferably using lasers, or with incisions through stamping.

Also in these cases, in order to prepare the shell type body according to the finding the user takes care of bending the panels in a suitable manner around the relative incisions, or recesses, and possibly fix or fasten them to one another through fixing means to stabilize the shell type body obtained.

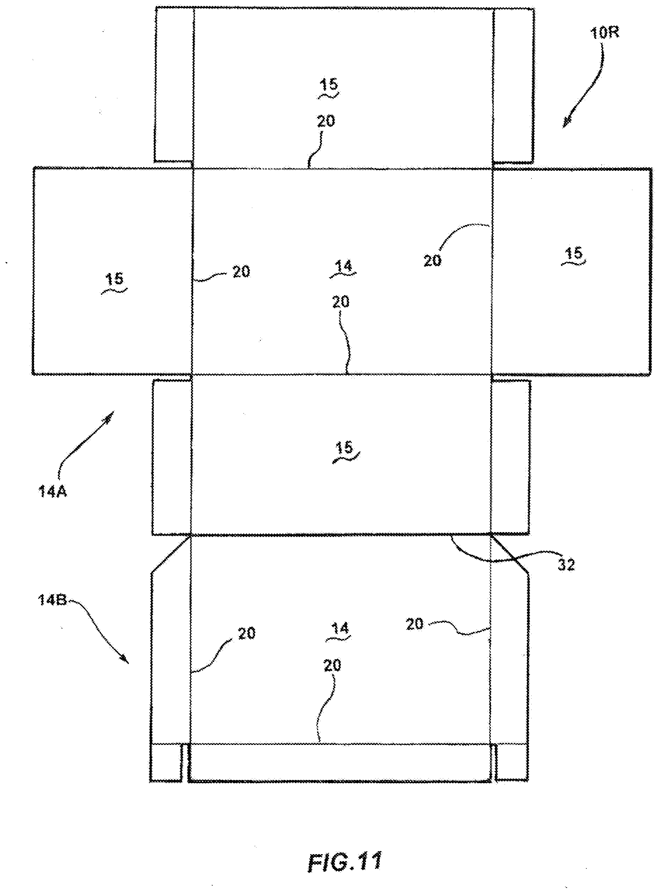

Figure 11 shows a yet further variant of a plate 10R according to the invention in which parts corresponding to the plate of Figure 8 are indicated with corresponding reference numerals and are not described in detail.

The plate 10R has been suitably cut from the corresponding plate-like element.

The plate 10R of Figure 11 is also intended to form a box-shaped closed shell type body and comprises a first plurality of panels 14A, intended to form a first half-shell and a second plurality of panels 14B, intended to form a second half-shell connected together through a hinging recess 32 defined between two contiguous panels of the first and second half-shell, respectively.

In such a version, one of the two half-shells is intended to form the housing body of the shell type body, whereas the second half-shell is intended to form the closing cover of the housing body. The cover is hinged to the housing body through the hinging recess 32 to open/close the shell type body.

Also in such a version, the recesses and/or the hinging recesses can be replaced with incisions made with suitable cutting tools, preferably using lasers.

In all of the versions described above for forming a desired shell type body 100 provisions are made to rotate the panels of the plate 10R around the respective recesses, or incisions, to orient them with respect to one another.

In every version, by varying the shape, size and number of the recesses, or incisions, and, therefore of the panels, it is possible to obtain a shell type body having the desired type and dimensions. It is possible to obtain open, or box-shaped, shell type bodies, possibly provided with a cover.

In some versions it is foreseen to fix the panels of the shell type body in the desired position to stabilize the shape of the shell type body itself. Such fixing can be carried out by welding or any other suitable way, for example by interlocking, through rivets, through stitching, or gluing.

In a preferred version, such fixing is carried out through removable fixing means so as to be able to be removed to dismount the shell type body 100.

The shell type body 100 can be provided with reinforcing means in corner zones of the shell type body 100 and/or in edge zones thereof. Such reinforcing means can be removably fixed or fastened to the shell type body 100 so as to be able to be separated from it if necessary.

In some variants, it is foreseen to apply and weld reinforcing strips on edge portions of the panels of the shell type body to increase the seal of the shell type body 100.

Possibly, between the reinforcing strips and the plate 10R it is possible to arrange a welding film compatible both with the material of the strips and with the material of the plate 10R and adapted for increasing the mutual adhesion thereof.

By varying the configuration and the position of the ribs 5 and of the cutting lines 21 and, therefore, the shape and the number of the panels formed, it is possible to obtain shell type bodies with widely varying shapes and with a desired number of sides.

Moreover, it is possible to vary the size and the shape of the ribs 5 to consequently vary the shape and size of the recesses defined on the plate-like material, thus the relative position of the panels of the shell type body 100 delimited by the recesses 20.

Advantageously, by varying the profile of the ribs 5 and, therefore, of the recesses 20, or by varying the profile of the incisions, it is possible to vary the mutual inclination of the panels and, therefore of the walls of the shell type body 100.

It is possible, for example, to obtain a shell type body with lateral panels substantially perpendicular with respect to the central panel, or flared going away from the central panel.

Advantageously, the plate 10R according to the invention is folded so as to close the recesses, i.e. so as to bring together the opposite edges 24 of each recess 20.

If, moreover, the plate 10R is provided with recesses 20 on both faces S, S' the plate itself can be folded in various ways, possibly accordion-like.

As stated, Figures 12-18 show some examples of shell type bodies obtained by folding a plate 10R obtained with the method of the invention, with it being understood that, as stated, by modifying the shape and number of recesses it is possible to obtain shell type bodies of widely varying shapes and sizes.

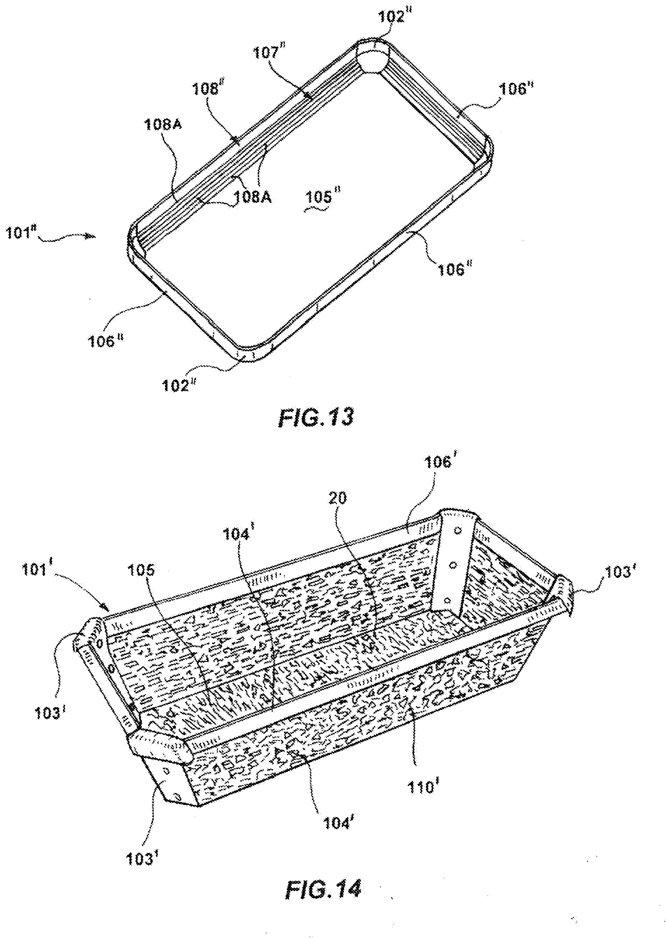

In order, for example, to make a tray 101 or 101', like those shown in Figures 12, and 14, respectively, for example starting from the plate 10R of Figure 8, the lateral panels 15 are folded with respect to the central panel 14 rotating them around the respective first recesses 20A, so as to position them transversally to the central panel 14.

In this way, the central panel forms the bottom portion 105 of the tray 101 and the lateral panels form the four lateral portions 106 arranged transversally with respect to the bottom portion 105 and connected to the latter through a corresponding recess, or incision 20A.

Advantageously, the tray 101 is obtained by folding the plate so as to close the incisions 20, i.e. so as to bring together the edges 24 of each incision. In this way, each incision 20 is positioned inside the tray 101, whereas each outer corner 110 of the tray is formed from the integral portion 90 of the plate, i.e. not engaged by the incision.

In the case of recesses, as stated, the folding can be advantageously carried out by rotating the panels in both directions around the respective recesses.

Moreover, the peripheral portions 15A, 15B of each lateral panel 15 are folded so as to at least partially superimpose the facing peripheral portions of two adjacent lateral panels at corner zones 102 of the tray 101 so as to reinforce them.

The superimposed peripheral portions 15A, 15B in the corner portions 102 can be welded or locked together in any other suitable way.

In a preferred version, the superimposed peripheral portions 15A, 15B are fixed together through removable fixing means. In this way, by removing the fixing means it is possible to dismount the tray 101.

At the cutting lines 21 or at the further cutting lines 22 it is possible to fold edge portions of the plate 10R so that edge portions 21A, 22A thereof are superimposed over peripheral portions 21B, 22B of the relative panel 15 and so that folded edges are generated.

The provision of folded edges "B" makes it possible to facilitate and make safer the handling of the tray by a user, avoiding the user coming into contact with potentially dangerous sharp edges.

Moreover, this makes it possible to reinforce the corner zones of the tray.

In the version shown in Figure 14, the tray 101' is also provided with a reinforcing angular element 103' positioned on each corner portion 102', so as to lock together two adjacent lateral panels and make the tray 101' more stable.

The angular element 103' can be welded to the tray 101' or fixed to it through suitable fixing means.

In a preferred version, removable or reversible fixing means are used that make it possible to removably fix the angular element 103' to the tray 101', for example interlocking fixing means or rivets.

In this way, it is possible, if desired, to remove the angular element for example to dismount the tray 101' and subsequently remount it when and if required.

Advantageously, the angular element 103' is made of PP or ABS.

In such a version, the tray 101' is also provided with finishing edges 104, applied onto the external edges of the lateral panels 15 and arranged to improve the grip of the tray 101' by a user and avoid the latter coming into contact with potentially sharp surfaces.

The finishing edges 104' advantageously have a curved profile to further improve the grip of the tray 101'.

The finishing edges 104' can also be removably fixed to the tray 101' to possibly be separated therefrom.

The panels can also in this case be glued or welded or stitched or even fixed through fixing means, possibly of the removable type, to stabilize the shape of the shell type body obtained.

The fixing means are advantageously provided in the angular or corner zones of the shell type body.

The tray 101' is provided on the bottom portion 105 and on the lateral portions 106 with decorations that make it possible to improve the aesthetic effect thereof. The decorations, made as stated above through sublimation paper, are preferably printed on the flat plate, as explained earlier.

This makes it possible not only to simplify the print, but also to increase the quality and definition of the decorations obtained.

Figure 13 shows a tray 101", made with the method of the invention, comprising a bottom portion 105", four distinct lateral panel portions 106" and four radial fittings 107, arranged between the bottom portion 105" and the lateral portions 106".

Each radial fitting 107" is obtained by making multiple recesses, or incisions 108, that are parallel and close together on the plate, for example using the ribs as shown in Figure 6B.

By varying the depth and shape of each recess 108 of the multiple recesses or incisions 108 and/or the distance between two adjacent recesses 108 of the multiple recesses or incisions 108 it is possible to vary the shape of the radial fitting 107.

Advantageously, the recesses or incisions 108 of the multiple recesses 108 are arranged symmetrically so as to obtain a radial fitting with symmetrical curvature decreasing moving away from the central portion thereof.

Also in this case, the provision of folded edges "B" makes it possible to facilitate and make safer the handling of the tray by a user.

In such a version, the tray 101" is provided with angular portions 102" arranged to form the corners of the tray and to join two contiguous lateral panels.

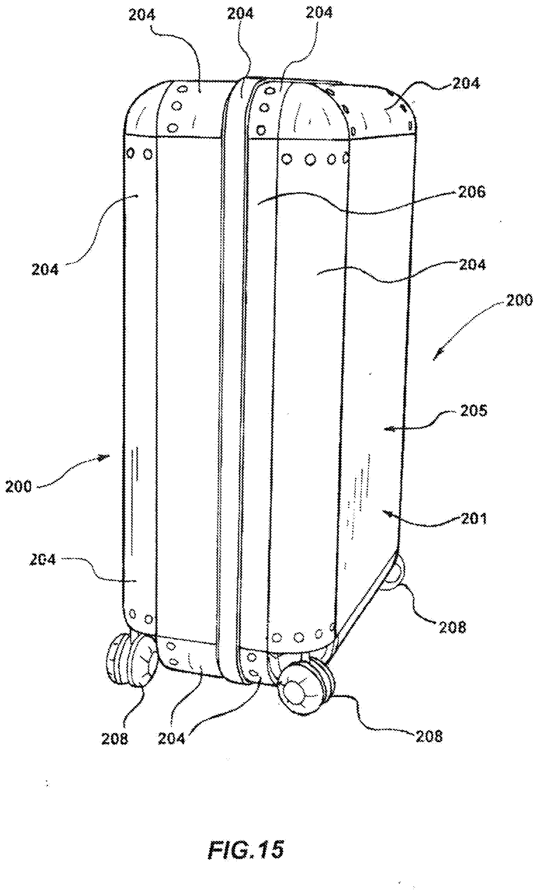

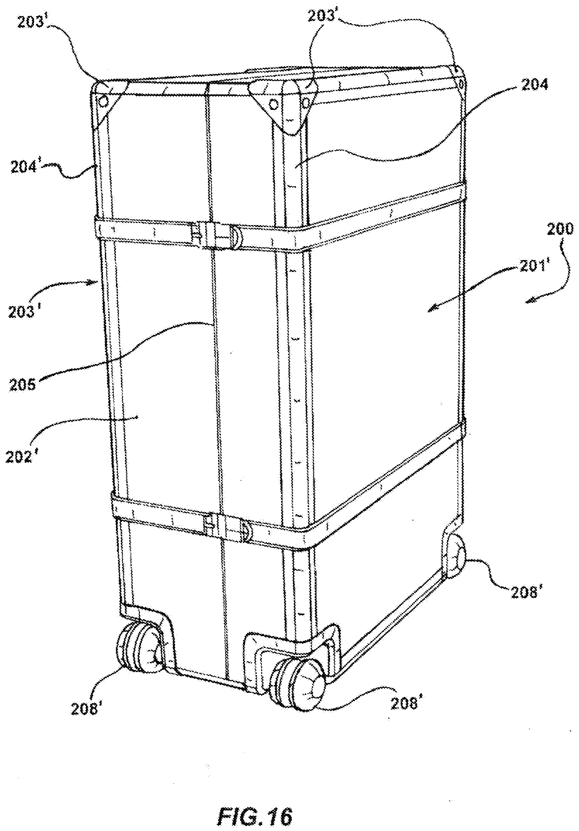

Other types of shell type body according to the finding can comprise suitcase shells, like those shown purely as an example, respectively, in Figures 15 and 16.

Figures 15 and 16 show two suitcases able to be obtained with at least one plate according to the invention. Corresponding parts of the suitcases of the Figures indicated above are indicated with corresponding reference numerals and they will not be described in detail.

The suitcase 200 comprises two shell type bodies 201, 202, each obtained by folding a plate obtained with the method of the invention similarly to what was discussed previously regarding the tray.

Advantageously, also in this case if incisions are foreseen, the plate 10R is folded so as to bring together the opposite edges 24 of each incision 20. Alternatively, the two shell type bodies of the same suitcase 200 can be obtained by folding a single plate, for example of the type of that shown in the Figures like the one shown in Figure 10.

Each shell type body 201, 202 comprises a bottom portion 205 and four distinct lateral portions 206 connected to the bottom portion through a corresponding radial fitting 207.

Each shell type body also comprises reinforcement elements 204 positioned in suitable zones of the shell type body to reinforce it. In the version shown, the reinforcement elements 204 are positioned at the edge and/or corner zones between the lateral panels, or between the lateral panels and the central panel, to reinforce and cover them.

The reinforcement elements 204 can be made of PP or ABS, or even of the same thermoplastic polymer material of the plate-like element, and can be welded or locked together in any other suitable way to the shell type body, for example by interlocking, through rivets, through stitching, gluing or welding.

The shell type bodies can be provided with further reinforcement elements, not visible in the Figures, and positioned in zones subjected to stresses to increase the strength and seal thereof, for example on edge portions of the shell type bodies, particularly on the larger sides, or in suitable zones of the panels.

Usually, the further reinforcement elements are associated with the internal face of the shell type body.

The two shell type bodies 201, 202 are hinged to one another so as to be able to be mutually rotated to open/close the suitcase 200, through hinge elements or even through a hinging recess.

During the machining of the plate 10R it can be foreseen to cut it so as to define niches in the shell type body in formation for receiving movement wheels.

This like other auxiliary operations, thanks to the method of the invention, can be carried out on a plate, i.e. a substantially flat element and this substantially simplifies such operations.

Advantageously, the plate-like element is provided on a face S', S thereof intended to form the inner part of the suitcase with a fabric coating.

Figure 16 shows an alternative version of a suitcase 200' made according to the finding, wherein parts corresponding to the suitcase of Figure 16 are indicated with corresponding reference numerals and are not described in detail.

Each shell type body 201', 202' comprises a bottom portion 205' and four distinct lateral portions 206' connected to the bottom portion through a corresponding recess or incision, and reinforcement elements 204' at and covering each corner of the suitcase 200'.

In such a version there are also angular reinforcing elements 203' foreseen on the corners of the suitcase 200'.

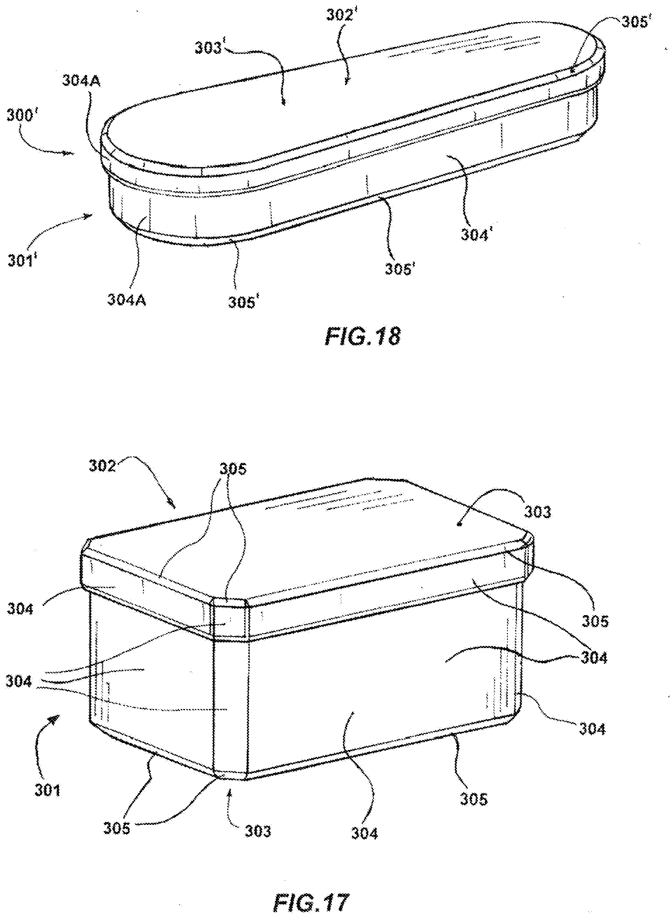

Figure 17 shows a container 300 comprising a housing body 301 and a cover 302 intended to removably enclose the housing body 301. Both the cover 302 and the housing body 301 are shell type bodies according to the finding and they are obtained by suitably folding a plate of suitable shape and size around the relative recesses or incisions.

Both the housing body 301 and the cover 302 comprise a bottom wall 303 and a plurality of lateral walls 304 arranged transversally with respect to the bottom 303 and connected to the latter through a corresponding fitting portion 305.

The fitting portions 305 are inclined both with respect to the bottom 303 and to the lateral walls 304.

Between each fitting portion 305 and the bottom 303 and each lateral wall, respectively, a respective recess or incision 20 is provided.

Figure 18 shows another version of a container 300' according to the finding; parts corresponding to the container of Figure 17 are indicated with the corresponding reference numerals and are not described in detail. The container 300' also comprises a housing body 301' and a cover 302' intended to removably enclose the housing body 301'. Also in this case the cover 302' and the housing body 301' are shell type bodies according to the finding and they are obtained by suitably folding a plate of suitable shape and size around the relative recesses or the relative incisions.

In such a version two lateral walls 304A' of the container are curved, i.e. obtained by folding a plate around corresponding recesses or incisions that are close together and parallel.

In all of the cases described above, the provision of folded edges "B" makes it possible to facilitate and make safer the handling of the objects by a user and also allows the insertion and fixing of possible coating materials.

The folded edges can be provided on outer edges of the shell type body in formation and/or between corner portions thereof. This also makes it possible to further reinforce the corner portions.

In an alternative version it is foreseen to treat a plate-like element 60 with the method of the invention, said element being shown in greater detail in Figures 7A and 7B and comprising two plates 60' of composite material, made of self-reinforced composite thermoplastic polymer material as described above, and a core 61 made of cellular material of the honeycomb type, arranged between them.

The core 61 has an alveolar structure and is preferably formed from PE, PP or PET and preferably has a thickness comprised between 0.5 and 2 cm.

Each plate 60' is formed from a plurality of superimposed layers 10A as explained above, preferably each plate 60' is formed from a number of layers between 3 and 5. The plates 60' of the same plate-like element 60 can be the same as each other in material, and/or also formed from the same number of layers, or even different from each other.

The plates 60' are firstly consolidated to lock together the layers that form them, then the core 61 is arranged between two hot plates 60', at a temperature comprised between 160°C and 175°C, so that the plates 60' weld to the core 61.

Thereafter, the plate-like element 60 is subjected to a forming step as described earlier, suitable for making a plurality of recesses 62 thereupon defining a plurality of mutually orientable panels on the plate-like element 60.

In the version shown, ribs having a triangular profile are used so as to make V-shaped recesses with incident walls inclined by an angle α selected based on the shape of the shell type body to be formed.

Also in this case, by suitably shaping the ribs used it is possible to vary the profile of the recesses 62 and, therefore, the angle that can be obtained between the panels. For example, in order to make a shell type body with mutually perpendicular adjacent walls it will be necessary and sufficient to make recesses with an angle α of about 90°.

In the case in which incisions are defined instead of recesses, the incisions 65 can be made so as to cut one of the two plate means and the core 61, leaving the second plate means intact. Alternatively, the incisions 65 can extend up to a desired percentage of the thickness "d2" of the second plate means.

The incisions are made as discussed earlier.

Therefore, the fusion of the edges 66 of the incision 65 is caused by sealing in this way both the plate means 60' and the core 61. This makes it possible to avoid fractures or delaminations thereof.

Also in such a version, the shell type body can be made by folding the plate so as to move apart or preferably bring together the edges 66 of each incision 65, i.e. rotating in both directions of the arrow F. Advantageously, in such a version V-shaped incisions are made with an angle α comprised between 45° and 90° according to the shape of the shell type body that it is wished to make.

To form a shell type body, the panels are rotated so as to bring together opposite edges 63 of each recess or incision 62, and the opposite edges 63 of the recesses 62 act as end stop for the folding limiting and at the same time stabilizing the orientation of the panels.

By using the plate-like element 60, a shell type body is obtained that is particularly light and at the same time strong.

The method of the present invention advantageously makes it possible to make items of self-reinforced composite thermoplastic polymer material, in particular SRPP, SRPE or SRPET, having various configuration, even curved, like for example containers, luggage shells, personal protection elements, sports equipment, automobile or motor vehicle components. Such a method makes it possible to obtain different advantages with respect to known processes, in particular obtaining shell type bodies with higher mechanical and aesthetic characteristics than those that can be obtained with known processes and, at the same time low cost.

A further advantage of the invention is given by the fact that the method can be carried out using relatively simple apparatuses.

The present invention thus solves the aforementioned problem with reference to the quoted prior art, at the same time offering other advantages in addition to those highlighted above.

In particular, the method of the invention is suitable for obtaining a shell type body of large size, with any desired depth value, also indicated as ratio between height and flat surface of the shell type body, of high aesthetic and mechanical characteristics.

Moreover, the method of the invention is suitable for treating plate-like elements having any desired thickness, without the thickness being able to have a negative influence on the aesthetic and mechanical properties of the shell type body obtained.

Moreover, with the method of the invention it is possible to obtain shell type bodies with constant thickness, or in any case in which the thickness can be adjusted and decided in a very precise manner.

Indeed, with the method of the invention sliding between the layers of the plate-like material that would cause irregularities in the thickness and variable mechanical and dimensional properties are avoided.

Moreover, it is possible to reinforce the plate-like material, by applying reinforcement elements in suitable portions thereof, or between the layers that form it, obtaining particularly strong shell type bodies; the reinforcement elements can be applied in any step of the forming method. Moreover, in the method of the invention there are no steps with clear plastic deformation and this avoids deformations of the reinforcement elements and contributes to increasing the strength of the shell type body obtained.

Moreover, the recesses allow the orientation of the panels but do not interrupt the structure of the plate-like element, and this makes it possible to avoid weakening the corner zones.

Moreover, thanks to the method of the invention shell type bodies of composite thermoplastic polymer material are obtained with high surface finish and with decorations printed with high precision.

The printing is carried out before the folding of the plate-like material, i.e. on a substantially flat surface.

This simplifies the printing and makes it possible to increase the results obtained.

Other possible machining can also be carried out before the folding of the plate-like material, i.e. on a flat element, and this substantially simplifies such auxiliary operations, like for example the perforation of the plate-like material.

The flat configuration of the layered material also makes it possible to carry out such operations in a single step. On the other hand, in known processes the perforation must be carried out on the shell type body formed and it is necessary to orient and move the shell type body to make the holes on all of the edges.

Moreover, with the method of the invention the off-cut produced is reduced by about 10-20% with respect to the off-cut produced with known thermoforming processes.

Moreover, shell type bodies are obtained that can be easily mounted and dismounted by a user to reduce bulk both during transportation and disposal.

Owing to the invention, items of composite thermoplastic polymer material, in particular self-reinforced polypropylene, are obtained having various configuration, like for example containers, luggage shells, personal protection elements, sports equipment, motorcycle and automobile components. According to the finding it is possible to obtain open or closed shell type bodies, shell type bodies formed from two half-shells hinged together, or even shell type bodies provided with a covering element hinged to the body itself.

It should be understood that by changing the shape and the number of the panels of the plate, the shape, position and number of the various incisions it is possible to obtain shell type bodies of widely varying shapes. Moreover, by varying the number and the characteristics of the layers of the plate-like element and, therefore, the characteristics of the plate, it is possible to obtain shell type bodies suitable for various different uses.

In particular, the shell type bodies according to the finding can be used as containers of delicate instruments, for example video-photographic apparatuses or musical instruments, or containers of automobiles or motorcycles, or even as parts of suitcases or trolley cases or similar travel items, or even trays and similar open or reclosable containers, backpacks or bags, or even shopping containers to be used for example in supermarkets. The shell type bodies according to the finding have curved walls, radial fittings, or even rectilinear walls, and/or perpendicular or variously inclined contiguous walls.

The shell type bodies according to the finding have high surface finish and with decorations printed with high precision they can be provided with decorations with high definition and clarity, also because the printing is carried out on flat objects.

Moreover, the shell type bodies of the finding can be mounted and dismounted by a user. This makes it possible to reduce the bulk both during transportation and also during disposal.

The shell type bodies of the finding have higher mechanical and aesthetic characteristics than those that can be obtained with the known processes and, at the same time low cost.

The shell type bodies according to the finding have constant and homogeneous thickness.

Moreover, as stated, the incisions can have various depth, and this, as stated, varies the number of layers of the plate that are cut and the number of layers that remain intact.

The intact layers at the incisions provide good mechanical strength at the corners.

Moreover, since some of the layers of the plate are intact the incision is not a fragile point of the shell type body that could potentially trigger breaking, as usually happens on the other hand in homogeneous, non-layered materials.

Moreover, by folding the plate so as to close the incisions, the integral portion 90 of the plate 1 at each incision constitutes the corners of the shell type body and make such parts extremely strong.

## Claims

1. Method for forming a shell type body (100) of self-reinforced composite thermoplastic polymer material from a plate-like element (10, 60), comprising a central region (11) and a peripheral region (12) which surrounds said central region (11), said method comprising:
- providing a press (1) including a first and a second die portion (3, 4) which can be moved between a forming configuration, in which they are pressed against each other, and a release configuration (Y), in which they are moved apart from each other;
- at least one of said first and/or said second die portion (3, 4) being provided with ribs (5) on an operative face (3A, 4A) thereof intended to abut said plate-like element (10);
- providing said plate-like element (10) on said press so that said central region (11) is in abutment on said operating face (4a) of said second die portion (4),
- retaining said plate-like element (10) at said peripheral region (12),
- moving said first (3) and/or said second die portion (4) towards said forming configuration until said first die portion (3) abuts said plate-like element (10) continuing to retain said plate-like element (10) at said peripheral region (12),
- a forming step in which said first (3) and said second die portion (4) are retained in said forming configuration for a predefined time, and said plate-like element (10) is retained between said first (3) and said second die portion (4) at a temperature for forming said self-reinforced composite thermoplastic polymer material so as to generate the at least partial fusion of a matrix thereof without causing the substantial fusion of the fibers
- so as to form by means of said ribs (5) on said central region (11) a plurality of recesses (20) defining on said central region (11) a plurality of lateral panels (15) which are mutually connected to a central panel (14) by means of at least one corresponding recess (20A),
- moving said first (3) and/or said second die portion (4) in said release configuration (Y) and extracting said plate-like element (10),
- successively folding said lateral panels (15) with respect to said central panel (14) at said recesses (20A, 20B) so as to form said shell type body (100).

2. Method according to claim 1, and further comprising releasing said peripheral region (12) of said plate-like element (10) when the latter is at a temperature less than the shrinkage temperature of the material.

3. Method according to one or more of the preceding claims, wherein said plate-like element (10) comprises a plurality of superimposed layers (10A) made of said self-reinforced composite thermoplastic polymer material, wherein said self-reinforced composite thermoplastic polymer material is preferably selected in a group comprising self-reinforced polypropylene (SRPP), self-reinforced polyethylene (SRPE), or self-reinforced PET (SRPET).

4. Method according to one or more of the preceding claims, and further comprising consolidating said plate-like element (10) before, or during, said forming step in order to fixedly join together the layers of said plurality of layers (10A) and form a rigid plate (10R).

5. Method according to claim 3 or 4, further comprising applying reinforcement elements in suitable zones of said plate-like element (10) between at least two layers of said plurality of layers (10A), said reinforcement elements comprising, for example, strips of netting of basalt or glass or carbon fiber, or polyaramids, or metal nets, and/or comprising placing a layer of amorphous and/or foamed material between at least two layers of said plurality of layers (10A), said layer of amorphous material preferably being in a central position of said plate-like element (10).

6. Method according to one of the preceding claims, and further comprising cutting said plate-like element (10) in order to form cutting lines (21, 22) between said lateral panels (15) and between said lateral panels (15) and said peripheral region (12) in order to cut from said plate-like element (10) a plate (10R) having a shape corresponding to the shape of said shell type body (100).

7. Method according to the preceding claim, and further comprising folding an edge portion (21A, 22A) delimited by said cutting lines (21, 22) on said lateral panels (15) to define a folded edge (B) of said plate-like element (10) so that said edge portions (21A, 22A) face and are superimposed on peripheral portions (21B, 22B) of the relative panel (15) and preferably further comprising defining a gap (I) between said edge portions (21A, 22A) and said peripheral portions (21B, 22B).

8. Method according to the preceding claim, wherein said plate-like element (10) comprises at least one finishing layer (10B) which is provided on at least one external face (S, S') of said plate-like element (10) and which is capable of conferring a desired surface finishing on said plate-like element (10), said plate-like element (10) preferably comprising a sheet of paper for sublimation printing (10C), on which there is formed an ornamental graphic is positioned on said at least one finishing layer (10B), at the side opposite said pile of layers (10A) of composite thermoplastic polymer material.

9. Method according to one of the preceding claims, wherein it is provided for heating said ribs (5) in order to locally heat in an adjustable manner said plate-like element at said recesses (20).

10. Method according to one of the preceding claims, wherein between a lateral panel (15) and said central panel (14) there is a plurality of recesses (50) which are parallel with and spaced apart from each other, so that the folding of said lateral panel at said plurality of recesses freely defines the formation of a radial connection between said lateral panel and said central panel.

11. Method according to one of the preceding claims, and further comprising fixing said panels of said shell type body in a desired position in order to stabilize the form of the shell type body itself, advantageously said fixing being carried out by means of removable fixing means in order to be able to disassemble said shell type body.

12. Method according to one of the preceding claims, wherein said plate-like element (60) comprises a first and a second plate of composite material, each plate being formed by a plurality of superimposed layers (10A) made in said composite thermoplastic polymer material and a core (61) of a honeycomb material arranged between said first and said second plate.

13. Shell type body of composite thermoplastic polymer material self-reinforced with fibers comprising a plurality of panels (14, 15) which are mutually connected by means of a corresponding recess (20A, 20B), said plurality of panels comprising at least one central panel (14) defining a bottom portion of said shell type body (100) and a plurality of lateral panels (15) connected to said central panel (14) by means of a corresponding recess (20A) and intended to form lateral walls of said shell type body, wherein said self-reinforced composite thermoplastic polymer material is selected from a group comprising self-reinforced polypropylene (SRPP), self-reinforced polyethylene (SRPE), or self-reinforced PET (SRPET), said shell type body (100) comprising a plurality of layers (10A) made of said self-reinforced composite thermoplastic polymer material, said recesses (20A, 20B) being formed by locally pressing the plurality of layers of the said self-reinforced composite thermoplastic polymer material so as to cause at least the partial fusion of the matrix thereof.

14. Shell type body according to claim 13, wherein each recess or incision (20, 20A, 20B) has a depth (H) comprised between 20-80% of the thickness (d1) of said plate (10R) so that at each recess (20) a portion of the plate (10R) having a further thickness (d3) is not engaged by the recess (20).

15. Shell type body according to claim 13 or 14, wherein said panels (14, 15) are rotated so as to bring together said opposite edges (24) of each recess or incision (20, 20A, 20B), the integral portion (90) of said plate (10R) at each recess or incision (20, 20A, 20B) forming the edge (110) of said shell type body.

16. Shell type body according to one of claims 13 to 15, and further comprising fixing elements (103) to mutually fix contiguous lateral panels of said shell type body,said fixing elements (103) being removable from said lateral panels to separate said lateral panels and dismount said shell type body, wherein said plate (60) preferably comprises a first and a second plate means (60') of self-reinforced composite thermoplastic polymer material, each plate means (60') being formed from a plurality of superimposed and consolidated layers (10A) made of said self-reinforced composite thermoplastic polymer material and a core (61) of honeycomb material arranged between said first and said second plate means.

## Patentansprüche

1. Verfahren zum Umformen eines schalenförmigen Körpers (100) aus selbstverstärktem thermoplastischem Polymerverbundmaterial aus einem plattenförmigen Element (10, 60) mit einem Mittelbereich (11) und einem den Mittelbereich (11) umgebenden Umfangsbereich (12), wobei das Verfahren aufweist:
- Vorsehen einer Presse (1) mit einem ersten und einem zweiten Formwerkzeugbereich (3, 4), die zwischen einer Umformkonfiguration, in der sie gegeneinander gepresst werden, und einer Freigabekonfiguration (Y), in der sie auseinander bewegt werden, bewegt werden können;
- zumindest einer des ersten und/oder des zweiten Formwerkzeugbereichs (3, 4) mit Rippen (5) auf einer Arbeitsfläche (3A, 4A) davon versehen ist, die dazu bestimmt ist, um am plattenförmigen Element (10) anzuliegen;
- Vorsehen des plattenförmigen Elements (10) auf der Presse, so dass der Mittelbereich (11) auf der Arbeitsfläche (4a) des zweiten Formwerkzeugbereichs (4) anliegt,
- Halten des plattenförmigen Elements (10) am Umfangsbereich (12),
- Bewegen des ersten (3) und/oder des zweiten Formwerkzeugbereichs (4) in Richtung der Umformkonfiguration, bis der erste Formwerkzeugbereich (3) am plattenförmigen Element (10) anliegt, wobei das plattenförmige Element (10) weiterhin am Umfangsbereich (12) gehalten wird,
- einen Umformschritt, bei dem der erste (3) und der zweite Formwerkzeugbereich (4) für eine vordefinierte Zeit in der Umformkonfiguration gehalten werden, und das plattenförmige Element (10) zwischen dem ersten (3) und dem zweiten Formwerkzeugbereich (4) auf einer Temperatur zum Umformen des selbstverstärkten thermoplastischen Polymerverbundmaterials gehalten wird, um die zumindest teilweise Verschmelzung einer Matrix davon zu erzeugen, ohne die wesentliche Verschmelzung der Fasern zu verursachen,
- um mittels der Rippen (5) auf dem Mittelbereich (11) eine Mehrzahl von Aussparungen (20) zu bilden, die auf dem Mittelbereich (11) eine Mehrzahl von seitlichen Platten (15) bilden, die mittels zumindest einer entsprechenden Aussparung (20A) mit einer Mittelplatte (14) miteinander verbunden sind,
- Bewegen des ersten (3) und/oder zweiten Formwerkzeugbereichs (4) in die Freigabekonfiguration (Y) und Herausziehen des plattenförmigen Elements (10),
- sukzessives Falten der seitlichen Platten (15) in Bezug auf die Mittelplatte (14) an den Aussparungen (20A, 20B), um den schalenförmigen Körper (100) zu bilden.

2. Verfahren nach Anspruch 1, das ferner ein Freigeben des Umfangsbereichs (12) des plattenförmigen Elements (10) aufweist, wenn letzteres eine Temperatur aufweist, die niedriger ist als die Schrumpftemperatur des Materials.

3. Verfahren nach einem oder mehreren der vorhergehenden Ansprüche, wobei das plattenförmige Element (10) eine Mehrzahl von übereinanderliegenden Schichten (10A) aufweist, die aus dem selbstverstärkten thermoplastischen Polymerverbundmaterial hergestellt sind, wobei das selbstverstärkte thermoplastische Polymerverbundmaterial vorzugsweise aus einer Gruppe ausgewählt wird, die selbstverstärktes Polypropylen (SRPP), selbstverstärktes Polyethylen (SRPE) oder selbstverstärktes PET (SRPET) aufweist.

4. Verfahren nach einem oder mehreren der vorhergehenden Ansprüche, das ferner ein Verfestigen des plattenförmigen Elements (10) vor oder während des Umformschritts aufweist, um die Schichten der Mehrzahl von Schichten (10A) fest miteinander zu verbinden und eine starre Platte (10R) zu bilden.

5. Verfahren nach Anspruch 3 oder 4, das ferner ein Anbringen von Verstärkungselementen in geeigneten Zonen des plattenförmigen Elements (10) zwischen zumindest zwei Schichten der Mehrzahl von Schichten (10A) aufweist, wobei die Verstärkungselemente beispielsweise Netzstreifen aus Basalt oder Glas- oder Kohlefaser oder Polyaramide oder Metallnetze sind, und/oder ein Anordnen einer Schicht aus amorphem und/oder geschäumtem Material zwischen zumindest zwei Schichten der Mehrzahl von Schichten (10A) aufweist, wobei sich die Schicht aus amorphem Material vorzugsweise in einer mittleren Position des plattenförmigen Elements (10) befindet.

6. Verfahren nach einem der vorhergehenden Ansprüche, das ferner ein Schneiden des plattenförmigen Elements (10) aufweist, um Schnittlinien (21, 22) zwischen den Seitenplatten (15) und zwischen den Seitenplatten (15) und dem Umfangsbereich (12) zu bilden, um aus dem plattenförmigen Element (10) eine Platte (10R) mit einer Form zu schneiden, die der Form des schalenförmigen Körpers (100) entspricht.

7. Verfahren nach dem vorhergehenden Anspruch, das ferner ein Falten eines Kantenbereichs (21A, 22A), der durch die Schnittlinien (21, 22) auf den Seitenplatten (15) abgegrenzt ist, aufweist, um eine gefaltete Kante (B) des plattenförmigen Elements (10) so zu bilden, dass die Kantenbereiche (21A, 22A) den peripheren Bereichen (21B, 22B) der entsprechenden Platte (15) zugewandt sind und diese überlagern, und vorzugsweise ferner ein Ausbilden eines Spalts (I) zwischen den Kantenbereichen (21A, 22A) und den Umfangsbereichen (21B, 22B) aufweist.

8. Verfahren nach dem vorhergehenden Anspruch, wobei das plattenförmige Element (10) zumindest eine Deckschicht (10B) aufweist, die auf zumindest einer Außenfläche (S, S') des plattenförmigen Elements (10) vorgesehen wird, und das in der Lage ist, dem plattenförmigen Element (10) eine gewünschte Oberflächenveredelung zu verleihen, wobei das plattenförmige Element (10) vorzugsweise ein Blatt Papier für den Sublimationsdruck (10C) aufweist, auf dem eine Ziergrafik ausgebildet ist, auf der zumindest eine Endschicht (10B) auf der Seite angeordnet ist, die dem Stapel von Schichten (10A) aus thermoplastischem PolymerVerbundmaterial gegenüberliegt.

9. Verfahren nach einem der vorhergehenden Ansprüche, wobei vorgesehen ist, die Rippen (5) zu erwärmen, um das plattenförmige Element an den Aussparungen (20) lokal einstellbar zu erwärmen.

10. Verfahren nach einem der vorhergehenden Ansprüche, wobei zwischen einer seitlichen Platte (15) und der Mittelplatte (14) eine Mehrzahl von Aussparungen (50) vorhanden sind, die parallel zueinander und voneinander beabstandet sind, so dass das Falten der seitlichen Platte an der Mehrzahl von Aussparungen ungehindert die Bildung einer radialen Verbindung zwischen der seitlichen Platte und der Mittelplatte bildet.

11. Verfahren nach einem der vorangehenden Ansprüche, das ferner ein Fixieren der Platten des schalenförmigen Körpers in einer gewünschten Position aufweist, um die Form des schalenförmigen Körpers selbst zu stabilisieren, wobei das Fixieren vorteilhafterweise mittels einer entfernbaren Befestigungseinrichtung durchgeführt wird, um den schalenförmigen Körper demontieren zu können.

12. Verfahren nach einem der vorhergehenden Ansprüche, wobei das plattenförmige Element (60) eine erste und eine zweite Platte aus Verbundmaterial aufweist, wobei jede Platte aus einer Mehrzahl von übereinanderliegenden Schichten (10A) aus dem thermoplastischen Polymerverbundmaterial und einem zwischen der ersten und zweiten Platte angeordneten Kern (61) aus einem Wabenmaterial besteht.

13. Schalenartiger Körper aus thermoplastischem PolymerVerbundmaterial, das mit Fasern selbstverstärkt ist und eine Mehrzahl von Platten (14, 15) aufweist, die miteinander mittels einer entsprechenden Aussparung (20A, 20B) verbunden sind, wobei die Mehrzahl von Platten zumindest eine Mittelplatte (14), die einen unteren Bereich des schalenförmigen Körpers (100) bildet, und eine Mehrzahl von Seitenplatten (15) aufweist, die mit der Mittelplatte (14) mittels einer entsprechenden Aussparung (20A) verbunden sind, und die dazu bestimmt sind, Seitenwände des schalenförmiger Körper zu bilden, wobei das selbstverstärkte thermoplastische Polymerverbundmaterial aus einer Gruppe ausgewählt wird, die selbstverstärktes Polypropylen (SRPP), selbstverstärktes Polyethylen (SRPE) oder selbstverstärktes PET (SRPET) aufweist, wobei der schalenförmige Körper (100) eine Mehrzahl von Schichten (10A) aufweist, die aus dem selbstverstärkten thermoplastischen PolymerVerbundmaterial hergestellt sind, wobei die Aussparungen (20A, 20B) durch lokales Pressen der Mehrzahl von Schichten des selbstverstärkten thermoplastischen Polymerverbundmaterials ausgebildet werden, um zumindest die teilweise Verschmelzung der Matrix davon zu bewirken.

14. Schalenartiger Körper nach Anspruch 13, wobei jede Aussparung oder jeder Einschnitt (20, 20A, 20B) eine Tiefe (H) aufweist, die zwischen 20-80% der Dicke (d1) der Platte (10R) liegt, so dass an jeder Aussparung (20) ein Bereich der Platte (10R) mit einer weiteren Dicke (d3) nicht in Eingriff mit der Aussparung (20) steht.

15. Schalenartiger Körper nach Anspruch 13 oder 14, wobei die Platten (14, 15) gedreht werden, um die gegenüberliegenden Kanten (24) jeder Aussparung oder jedes Einschnittes (20, 20A, 20B) zusammenzubringen, wobei der einstückige Bereich (90) der Platte (10R) an jeder Aussparung oder jedem Einschnitt (20, 20A, 20B) die Kante (110) des schalenförmigen Körpers bildet.

16. Schalenartiger Körper nach einem der Ansprüche 13 bis 15, der ferner Befestigungselemente (103) aufweist, um aneinandergrenzende Seitenplatten des Schalenkörpers aneinander zu befestigen, wobei die Befestigungselemente (103) von den Seitenplatten entfernbar sind, um die Seitenplatten zu trennen und den Schalenkörper zu demontieren, wobei die Platte (60) vorzugsweise eine erste und eine zweite Platteneinrichtung (60') aus selbstverstärktem thermoplastischem Polymer-Verbundmaterial aufweist, wobei jede Platteneinrichtung (60') aus einer Mehrzahl von übereinanderliegenden und verfestigten Schichten (10A) aus dem selbstverstärkten thermoplastischen Polymerverbundmaterial und einem zwischen der ersten und der zweiten Platteneinrichtung angeordneten Kern (61) aus Wabenmaterial ausgebildet wird.

## Revendications

1. Procédé pour former un corps de type coque (100) de matériau polymère thermoplastique composite autorenforcé à partir d'un élément en plaque (10, 60), comprenant une région centrale (11) et une région périphérique (12) qui entoure ladite région centrale (11), ledit procédé comprenant :
- la fourniture d'une presse (1) comportant une première et une seconde partie filière (3, 4) qui peuvent être déplacées entre une configuration de formation, dans laquelle elles sont pressées l'une contre l'autre, et une configuration de libération (Y), dans laquelle elles sont éloignées l'une de l'autre ;
- au moins une parmi ladite première et/ou ladite seconde partie filière (3, 4) étant dotée de nervures (5) sur une face de fonctionnement (3A, 4A) de celle-ci destinée à venir en butée contre ledit élément en plaque (10) ;
- la fourniture dudit élément en plaque (10) sur ladite presse de sorte que ladite région centrale (11) soit en butée sur ladite face de fonctionnement (4a) de ladite seconde partie filière (4),
- la retenue dudit élément en plaque (10) au niveau de ladite région périphérique (12),
- le déplacement de ladite première partie filière (3) et/ou ladite seconde partie filière (4) vers ladite configuration de formation jusqu'à ce que ladite première partie filière (3) vienne en butée contre ledit élément en plaque (10) continuant à retenir ledit élément en plaque (10) au niveau de ladite région périphérique (12),
- une étape de formation dans laquelle ladite première partie filière (3) et ladite seconde partie filière (4) sont retenues dans ladite configuration de formation pendant un temps prédéfini, et ledit élément en plaque (10) est retenu entre ladite première partie filière (3) et ladite seconde partie filière (4) à une température pour former ledit matériau polymère thermoplastique composite autorenforcé de manière à générer la fusion au moins partielle d'une matrice de celui-ci sans provoquer la fusion importante des fibres
- de manière à former au moyen desdites nervures (5) sur ladite région centrale (11) une pluralité d'évidements (20) la définition sur ladite région centrale (11) d'une pluralité de panneaux (15) latéraux qui sont reliés mutuellement à un panneau (14) central au moyen d'au moins un évidement (20A) correspondant,
- le déplacement de ladite première partie filière (3) et ladite seconde partie filière (4) dans ladite configuration de libération (Y) et l'extraction dudit élément en plaque (10),
- le pliage de manière successive desdits panneaux (15) latéraux par rapport audit panneau (14) central au niveau desdits évidements (20A, 20B) de manière à former ledit corps de type coque (100).

2. Procédé selon la revendication 1, et comprenant en outre la libération de ladite région périphérique (12) dudit élément en plaque (10) lorsque ce dernier est à une température inférieure à la température de rétraction du matériau.

3. Procédé selon une ou plusieurs des revendications précédentes, dans lequel ledit élément en plaque (10) comprend une pluralité de couches (10A) superposées faites dudit matériau polymère thermoplastique composite autorenforcé, dans lequel ledit matériau polymère thermoplastique composite autorenforcé est de préférence sélectionné dans un groupe comprenant du polypropylène autorenforcé (SRPP), du polyéthylène autorenforcé (SRPE) ou du PET autorenforcé (SRPET).

4. Procédé selon une ou plusieurs des revendications précédentes, et comprenant en outre la consolidation dudit élément en plaque (10) avant, ou durant, ladite étape de formation afin de joindre ensemble de manière fixe les couches de ladite pluralité de couches (10A) et former une plaque (10R) rigide.

5. Procédé selon la revendication 3 ou 4, comprenant en outre l'application d'éléments de renfort dans des zones appropriées dudit élément en plaque (10) entre au moins deux couches de ladite pluralité de couches (10A), lesdits éléments de renfort comprenant, par exemple, des bandes de nappe de filet de basalte ou de verre ou de fibre de carbone, ou des polyaramides, ou des filets de métal, et/ou comprenant le placement d'une couche de matériau amorphe et/ou expansé entre au moins deux couches de ladite pluralité de couches (10A), ladite couche de matériau amorphe étant de préférence dans une position centrale dudit élément en plaque (10).

6. Procédé selon l'une des revendications précédentes, et comprenant en outre la découpe dudit élément en plaque (10) afin de former des lignes de découpe (21, 22) entre lesdits panneaux (15) latéraux et entre lesdits panneaux (15) latéraux et ladite région périphérique (12) afin de découper dans ledit élément en plaque (10) une plaque (10R) ayant un contour correspondant au contour dudit corps de type coque (100).

7. Procédé selon la revendication précédente, et comprenant en outre le pliage d'une partie bord (21A, 22A) délimitée par lesdites lignes de découpe (21, 22) sur lesdits panneaux (15) latéraux pour définir un bord plié (B) dudit élément en plaque (10) de sorte que lesdites parties bords (21A, 22A) fassent face et soient superposées à des parties périphériques (21B, 22B) du panneau (15) relatif et de préférence comprenant en outre la définition d'un interstice (I) entre lesdites parties bords (21A, 22A) et lesdites parties périphériques (21B, 22B).

8. Procédé selon la revendication précédente, dans lequel ledit élément en plaque (10) comprend au moins une couche de finition (10B) qui est fournie sur au moins une face externe (S, S') dudit élément en plaque (10) et qui est capable de conférer une finition de surface souhaitée audit élément en plaque (10), ledit élément en plaque (10) comprenant de préférence une feuille de papier pour une impression par sublimation (10C), sur laquelle il est formé une image décorative est positionnée sur ladite au moins une couche de finition (10B), du côté opposé à ladite pile de couches (10A) de matériau polymère thermoplastique composite.

9. Procédé selon l'une des revendications précédentes, dans lequel il est fourni pour chauffer lesdites rainures (5) afin de chauffer localement d'une manière réglable ledit élément en plaque au niveau desdits évidements (20).

10. Procédé selon l'une des revendications précédentes, dans lequel entre un panneau (15) latéral et ledit panneau (14) central il y a une pluralité d'évidements (50) qui sont parallèles les uns aux autres et espacés les uns des autres, de sorte que le pliage dudit panneau latéral au niveau de ladite pluralité d'évidements définisse librement la formation d'une liaison radiale entre ledit panneau latéral et ledit panneau central.

11. Procédé selon l'une des revendications précédentes, et comprenant en outre la fixation desdits panneaux dudit corps de type coque dans une position souhaitée afin de stabiliser la forme du corps de type coque lui-même, de manière avantageuse ladite fixation étant réalisée au moyen de moyens de fixation amovibles afin de pouvoir désassembler ledit corps de type coque.

12. Procédé selon l'une des revendications précédentes, dans lequel ledit élément en plaque (60) comprend une première et une seconde plaque de matériau composite, chaque plaque étant formée par une pluralité de couches (10A) superposées faites dans ledit matériau polymère thermoplastique composite et un coeur (61) d'un matériau alvéolé agencé entre ladite première et ladite seconde plaque.

13. Corps de type coque de matériau polymère thermoplastique composite autorenforcé avec des fibres comprenant une pluralité de panneaux (14, 15) qui sont reliés mutuellement au moyen d'un évidement (20A, 20B) correspondant, ladite pluralité de panneaux comprenant au moins un panneau (14) central définissant une partie inférieure dudit corps de type coque (100) et une pluralité de panneaux (15) latéraux reliés audit panneau (14) central au moyen d'un évidement (20A) correspondant et destinés à former des parois latérales dudit corps de type coque, dans lequel ledit matériau polymère thermoplastique composite autorenforcé est sélectionné dans un groupe comprenant du polypropylène autorenforcé (SRPP), du polyéthylène autorenforcé (SRPE) ou du PET autorenforcé (SRPET), ledit corps de type coque (100) comprenant une pluralité de couches (10A) faites dudit matériau polymère thermoplastique composite autorenforcé, lesdits évidements (20A, 20B) étant formés en pressant localement la pluralité de couches dudit matériau polymère thermoplastique composite autorenforcé de manière à provoquer au moins la fusion partielle de la matrice de celui-ci.

14. Corps de type coque selon la revendication 13, dans lequel chaque évidement ou incision (20, 20A, 20B) a une profondeur (H) comprise entre 20 et 80 % de l'épaisseur (d1) de ladite plaque (10R) de sorte qu'au niveau de chaque évidement (20) une partie de la plaque (10R) ayant une plus grande épaisseur (d3) ne soit pas mise en prise par l'évidement (20).

15. Corps de type coque selon la revendication 13 ou 14, dans lequel lesdits panneaux (14, 15) tournent de manière à rassembler lesdits côtés opposés (24) de chaque évidement ou incision (20, 20A, 20B), la partie intégrée (90) de ladite plaque (10R) au niveau de chaque évidement ou incision (20, 20A, 20B) formant le bord (110) dudit corps de type coque.

16. Corps de type coque selon l'une des revendications 13 à 15, et comprenant en outre des éléments de fixation (103) pour fixer mutuellement des panneaux latéraux contigus dudit corps de type coque, lesdits éléments de fixation (103) étant amovibles desdits panneaux latéraux pour séparer lesdits panneaux latéraux et démonter ledit corps de type coque, dans lequel ladite plaque (60) comprend de préférence un premier et un second moyen plaque (60') de matériau polymère thermoplastique composite autorenforcé, chaque moyen plaque (60') étant formé à partir d'une pluralité de couches (10A) superposées et consolidées faites dudit matériau polymère thermoplastique composite autorenforcé et d'un coeur (61) de matériau alvéolé agencé entre ledit premier et ledit second moyen plaque.
